(19) Europäisches Patentamt
European Patent Office
Office européen des brevets

(11) EP 3 392 319 A1

(12) # EUROPEAN PATENT APPLICATION
published in accordance with Art. 153(4) EPC

(43) Date of publication:
**24.10.2018 Bulletin 2018/43**

(21) Application number: **16875460.4**

(22) Date of filing: **06.12.2016**

(51) Int Cl.:
***C09D 11/40*** *(2014.01)* ***B41J 2/01*** *(2006.01)*
***B41M 5/00*** *(2006.01)* ***C09D 11/322*** *(2014.01)*
***C09D 11/326*** *(2014.01)*

(86) International application number:
**PCT/JP2016/086163**

(87) International publication number:
**WO 2017/104477 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.12.2015 JP 2015245283**

(71) Applicant: **DIC Corporation**
**Tokyo 174-8520 (JP)**

(72) Inventors:
- **NIO Takahiro**
**Kitaadachi-gun**
**Saitama 362-8577 (JP)**
- **KITADE Maiko**
**Kitaadachi-gun**
**Saitama 362-8577 (JP)**
- **TSUKAMOTO Takuji**
**Kitaadachi-gun**
**Saitama 362-8577 (JP)**

(74) Representative: **Adam, Holger**
**Kraus & Weisert**
**Patentanwälte PartGmbB**
**Thomas-Wimmer-Ring 15**
**80539 München (DE)**

(54) **AQUEOUS INK SET FOR INK JET RECORDING AND INK JET RECORDING METHOD**

(57) [Object] An object of the present invention is to provide an aqueous ink set for inkjet recording and an inkjet recording method that allow the formation of prints with reduced bleeding and color mixing on non-absorptive recording mediums and low-absorptive recording mediums.

[Solution] The present invention relates to an aqueous ink set for inkjet recording including first to n-th aqueous inks for inkjet recording. Each of the aqueous inks contains a pigment, water, a surfactant, a binder resin, a urea compound, and a water-soluble organic solvent (1) having a boiling point of from 100°C to 200°C inclusive and a vapor pressure at 20°C of 0.5 hPa or more. All the first to n-th aqueous inks satisfy a specific expression for $\gamma 1$ and $\gamma 2$. $\gamma 1$ is the surface tension of one of the first to n-th aqueous inks that is jetted as droplets prior to different one, and $\gamma 2$ is the surface tension of the different one that is jetted as droplets after the one of the first to n-th aqueous inks.

EP 3 392 319 A1

## Description

### Technical Field

The present invention relates to an aqueous ink set for inkjet recording and to an inkjet recording method.

### Background Art

Aqueous pigment inks for inkjet recording can form prints excellent in lightfastness etc. and are therefore contemplated to be used for printing on various mediums such as plain paper, coated paper, art paper, plastic films, metals, and fabrics.

In particular, with the recent dramatic growth of the print-on-demand market, there is a need for a technique that allows high-speed printing of aqueous pigment inks for inkjet recording on a recording medium and production of high-quality prints comparable to prints obtained by planography.

To print high-quality prints at high speed, it is necessary to reduce bleeding (which may be referred to also as "color mixing") at boundaries between inks with different hues. For example, one previously known method for preventing bleeding of inks is for an ink set used for an image forming device that forms an image by jetting ink droplets at a pixel density of 650 dpi or more and a recording speed of 0.5 $m^2$/min or more. This ink set is characterized in that the ink set contains ink compositions including at least an ink composition A and an ink composition B and satisfies prescribed conditions (see, for example, PTL 1 or PTL 2).

However, when the above inks are used for high-speed printing on a non-absorptive recording medium or a low-absorptive recording medium such as coated paper, art paper, or a plastic film, bleeding at color boundaries between inks with different hues cannot be reduced to a practically acceptable level. Therefore, a high-image quality print may not be obtained.

### Citation List

### Patent Literature

PTL 1: Japanese Unexamined Patent Application Publication No. 2005-335280
PTL 2: Japanese Unexamined Patent Application Publication No. 2011-79952

## Summary of Invention

### Technical Problem

An object of the present invention is to provide an aqueous ink set for inkjet recording and an inkjet recording method that allow the formation of prints with reduced bleeding and color mixing on non-absorptive recording mediums and low-absorptive recording mediums such as plastics, metals, coated paper, and art paper that do not absorb or resist absorbing solvents such as water. Solution to Problem

The present inventors have achieved the above object by providing an ink set which uses inks each containing a urea compound and a water-soluble organic solvent having a specific boiling point and a specific vapor pressure and in which the surface tensions of the inks used in the set are specified.

Accordingly, the present invention relates to an aqueous ink set for inkjet recording including first to n-th aqueous inks for inkjet recording, wherein each of the aqueous inks contains a water-soluble organic solvent (1), a pigment, a surfactant, a urea compound, a binder resin, and water, the water-soluble organic solvent (1) having a boiling point of from 100°C to 200°C inclusive and a vapor pressure at 20°C of 0.5 hPa or more, and wherein all the first to n-th aqueous inks satisfy the following (a):
[Math. 1]

$$-3 \leq \gamma 1 - \gamma 2 \leq 3 \text{ [mN/m]} \quad \text{(a)}$$

where $\gamma 1$ is the surface tension of any one of the first to n-th aqueous inks that is jetted as droplets prior to different one of the first to n-th aqueous inks, and $\gamma 2$ is the surface tension of the different one of the first to n-th aqueous inks that is

jetted as droplets after the any one of the first to n-th aqueous inks.

The present invention also relates to an inkjet recording method used for a non-absorptive recording medium or a low-absorptive recording medium, wherein the inkjet recording method uses the aqueous ink set for inkjet recording.

Advantageous Effects of Invention

The use of the aqueous ink set for inkjet recording according to the present invention allows the production of prints with reduced bleeding and color mixing on non-absorptive recording mediums and low-absorptive recording mediums such as plastics, metals, coated paper, and art paper that do not absorb or resist absorbing solvents such as water.

Description of Embodiments

(First to n-th inks)

The aqueous ink set for inkjet recording according to the present invention includes first to n-th aqueous inks.

The first to n-th inks are aqueous inks for inkjet recording.

In the inkjet recording method, an inkjet printer is generally used. A plurality of inks that differ in at least one of hue, lightness, and chroma may be installed in the inkjet printer.

The first to n-th aqueous inks used may be a combination of aqueous inks that differ in any one of hue, lightness, and chroma.

The first to n-th aqueous inks used may be a combination of aqueous inks that are equal in hue, lightness, and chroma but differ in tinting power (specifically a dark ink and a light ink). Specifically, the aqueous inks used can be, for example, a combination of inks that contain the same pigment but differ in at least one of hue, lightness, and chroma.

Examples of the combination of two of the first to n-th aqueous inks in the ink set of the present invention include (C, M), (C, Y), (C, BK), (M, C), (Y, C), (BK, C), (M, Y), (Y, M), (M, BK), (BK, M), (Y, BK), (BK, Y), (C, LC), (C, LM), (LC, C), (LM, C), (M, LC), (M, LM), (LC, M), (LM, M), (Y, LC), (Y, LM), (CL, Y), (LM, Y), (BK, LC), (BK, LM), (LC, BK), (LM, BK), (LC, LM), and (LM, LC).

Here, C represents a cyan ink, M represents a magenta ink, Y represents a yellow ink, BK represents black, LC represents a light cyan ink, and LM represents a light magenta ink.

(Surface tension)

In the aqueous ink set for inkjet recording according to the present invention, all the first to n-th aqueous inks included in the ink set satisfy expression (a).

[Math. 2]

$$-3 \leq \gamma 1 - \gamma 2 \leq 3 \ [\mathrm{mN/m}] \quad (a)$$

Here, $\gamma 1$ is the surface tension of any one of the first to n-th aqueous inks that is jetted as droplets prior to different one of the first to n-th aqueous inks, and $\gamma 2$ is the surface tension of the different one of the first to n-th aqueous inks that is jetted as droplets after the any one of the first to n-th aqueous inks.

Each of the surface tensions $\gamma 1$ and $\gamma 2$ means both dynamic surface tension and static surface tension. In the ink set of the present invention, inks that satisfy the above expression (a) are used irrespective of whether each of the surface tensions $\gamma 1$ and $\gamma 2$ is dynamic surface tension or static surface tension.

The surface tension of each of the inks in the present invention at 25°C is preferably 20 to 50 mN/m and more preferably 20 to 40 mN/m. This is because the occurrence of bleeding at color boundaries between inks can be effectively reduced, because image defects such as feathering can be prevented, and because the occurrence of ink ejection failure and misdirection caused by leakage of the inks in the vicinity of nozzles during ink ejection can be prevented.

Known examples of the method for measuring static surface tension include a capillary-rise method, a dropping method, and a ring method. In the present invention, to measure the static surface tension, a Wilhelmy method (vertical plate method) is used.

In the Wilhelmy method (vertical plate method), a petri dish is filled with a medium to be measured (such as an ink), and a probe is brought into contact with the surface of the liquid. Upon contact with the liquid surface, the probe is pulled into the water by its surface tension. Let the force when the probe in equilibrium is pulled into the water be P. Then expression (b) derived from the Wilhelmy principle holds, and the surface tension is determined. In expression (b), S is the cross-sectional area of the probe; L is the circumferential length of the probe; m is the weight of the probe; h is

the amount of sinking; $\rho$ is the density of the liquid; and g is the gravitational acceleration (about 9.8 $m/s^2$).
[Math. 3]

$$P = mg + L\gamma - sh\rho g \quad (b)$$

However, the force P when the probe is pulled includes buoyancy shpg. In practice, h is set to zero so that the buoyancy is adjusted to zero. Specifically, the probe is pulled up to set h to zero, and force $P_1$ when h is zero is measured to determine the buoyancy $\gamma$ using (expression c).
[Math. 4]

$$P_1 = mg + L\gamma\gamma = (P_1 - mg)/L \quad (c)$$

The range of "$\gamma$1 - $\gamma$2" in expression (a) above is from - 3 to 3 inclusive, as described above. However, it is preferable to use an ink set in which the range of "$\gamma$1 - $\gamma$2" is from -1 to 1 inclusive. In order to obtain a print with further reduced bleeding and color mixing on a non-absorptive recording medium or a low-absorptive recording mediums, it is particularly preferable to use an ink set in which the range of "$\gamma$1 - $\gamma$2" is from -0.2 to 0.2 inclusive.
When first to n-th aqueous inks satisfying the above expression (a) are used, variations in the amounts (densities) of surfactants present on the surfaces of aqueous ink droplets landing on a recording medium tend to be reduced. Therefore, even when two or more aqueous ink droplets landing on a recording medium are brought into contact with each other, migration of the ink components between the aqueous ink droplets due to the difference in concentration of the surfactants is reduced, so that a print with reduced bleeding and color mixing may be obtained.
Each of the above-described aqueous inks contains a specific water-soluble organic solvent (1) described later and is therefore excellent in quick-drying characteristics. Since aqueous ink droplets landing on a recording medium dry and thicken quickly, spreading of the ink droplets can be minimized. In this case, migration of the ink components between the aqueous ink droplets is reduced, so that a print with reduced bleeding and color mixing may be obtained.
The phrase "jetting ink droplets" in the present invention means that the ink is ejected from an ink jet head to cause the ink droplets to land on a recording medium. The phrase "jetted as droplets prior to" means that droplets of one of two aqueous inks selected from the first to n-th aqueous inks are caused to land on a recording medium prior to droplets of the other aqueous ink. The phrase "jetted as droplets after" means that, after droplets of one of two aqueous inks selected from the first to n-th aqueous inks are caused to land on a recording medium prior to droplets of the other aqueous ink, the droplets of the other aqueous ink are caused to land on the recording medium with delay.
The intervals between droplets jetted are determined by printing speed, i.e., recording medium feed speed, and the nozzle pitch of the inkjet head. However, in the present invention, no particular limitation is imposed on the intervals between droplets jetted.
To jet ink droplets, an inkjet recording device including an inkjet head can be used. The inkjet head used may be an inkjet head that can eject only one type of ink from the head or an inkjet head having two or more ink channels and capable of ejecting a plurality of inks from among the first to n-th aqueous inks.
The ink set of the present invention includes aqueous inks for inkjet recording. As the first to n-th aqueous inks included in the ink set, inks each containing a water-soluble organic solvent (1), a pigment, a surfactant, a urea compound, a binder resin, and water are used.

(Water-soluble organic solvent (1))

As the water-soluble organic solvent (1) included in each aqueous ink, a water-soluble organic solvent having a boiling point of from 100°C to 200°C inclusive and a vapor pressure at 20°C of 0.5 hPa or more is used.
The first to n-th aqueous inks each containing the water-soluble organic solvent (1) are excellent in drying characteristics after landing on a recording medium. Therefore, with the obtained aqueous ink set for inkjet recording, prints with reduced bleeding and color mixing can be formed on a non-absorptive recording medium or a low-absorptive recording medium.
The water-soluble organic solvent (1) used may be one or a combination of two or more from among 3-methoxy-1-butanol, 3-methyl-3-methoxy-1-butanol, 3-methoxy-3-methyl-1-butyl acetate, ethylene glycol monomethyl ether, ethylene glycol monoethyl ether, ethylene glycol monopropyl ether, ethylene glycol monobutyl ether, ethylene glycol monoisobutyl ether, ethylene glycol-t-butyl ether, propylene glycol monomethyl ether, propylene glycol monoethyl ether, propylene glycol monopropyl ether, propylene glycol monomethyl ether acetate, diethylene glycol dimethyl ether, diethylene glycol methylethyl ether, diethylene glycol diethyl ether, dipropylene glycol dimethyl ether, 4-methoxy-4-methyl-2-pentanone, and ethyl lactate.

In particular, from the viewpoint of storage stability of the first to n-th aqueous inks and their adaptability to components of an inkjet device, the water-soluble organic solvent (1) used is preferably a water-soluble organic solvent in which a hydrogen bond term δH in HSPs (Hansen solubility parameters) is within the range of 6 to 20. The adaptability to the components of the inkjet device means deterioration of the inkjet device due to swelling and dissolution of the components that occur when the inks are in contact with a head unit and channels of the device for a long time.

As the water-soluble organic solvent with an HSP within the above range, it is preferable to use, for example, 3-methoxy-1-butanol, 3-methyl-3-methoxy-1-butanol, ethylene glycol monomethyl ether, ethylene glycol monoethyl ether, ethylene glycol monopropyl ether, ethylene glycol monobutyl ether, ethylene glycol monoisobutyl ether, ethylene glycol-t-butyl ether, propylene glycol monomethyl ether, or propylene glycol monoethyl ether, and it is particularly preferable to use 3-methoxy-1-butanol or 3-methyl-3-methoxy-1-butanol.

In the present invention, it is preferable to use the water-soluble organic solvent (1) in combination with propylene glycol (2) and at least one organic solvent (3) selected from the group consisting of glycerin, diglycerin, glycerin derivatives, and diglycerin derivatives because the excellent drying characteristics of the aqueous inks after landing on a recording medium are not impaired, because the formation of a coating near ink ejection nozzles due to drying or solidification of the aqueous inks can be prevented, and because, even when the coating of an aqueous ink is formed, the coating can be re-dispersed in the aqueous ink newly supplied and therefore excellent ejectability can be maintained.

Examples of the glycerin derivatives and the diglycerin derivatives used as the organic solvent (3) include polyglycerin, diglycerin fatty acid esters, polyoxypropylene(n)polyglyceryl ethers represented by general formula (1), and polyoxyethylene(n)polyglyceryl ethers represented by general formula (2), and two or more of them may be used simultaneously. In the present invention, it is particularly preferable to select glycerin or polyoxypropylene(n)polyglyceryl ether with n = 8 to 15.

[Chem. 1]

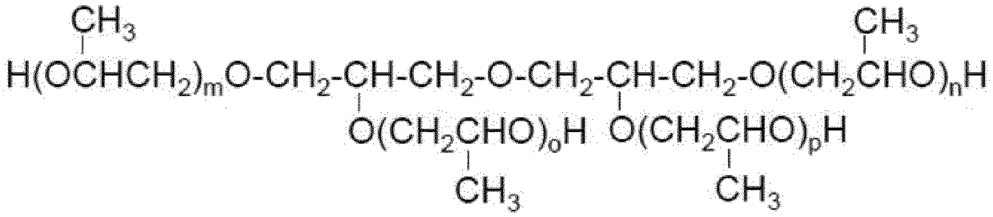

(1)

[Chem. 2]

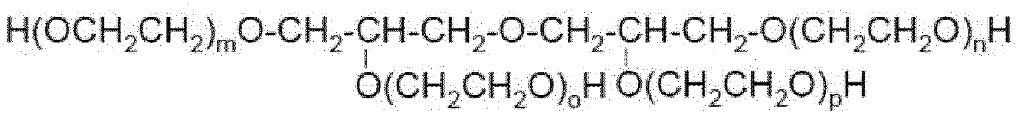

(2)

In general formulas (1) and (2), m, n, o, and p each independently represent an integer of 1 to 10.

The water-soluble organic solvent (1) is used preferably in an amount within the range of 1 to 20% by mass based on the mass of each of the first to n-th aqueous inks, more preferably in an amount within the range of 1 to 15% by mass, and particularly preferably in an amount within the range of 1 to 10% by mass from the viewpoint of forming a print with further reduced bleeding and color mixing on a non-absorptive recording medium or a low-absorptive recording medium.

The propylene glycol (2) is used preferably in an amount within the range of 1 to 30% by mass based on the mass of each of the first to n-th aqueous inks, more preferably in an amount within the range of 1 to 25% by mass, and particularly preferably in an amount within the range of 1 to 20% by mass from the viewpoint of obtaining inks for inkjet recording having good ejectability without influence on the quick-drying characteristics of the inks.

The organic solvent (3) is used preferably in an amount within the range of 1 to 20% by mass based on the mass of each of the first to n-th aqueous inks, more preferably in an amount within the range of 2 to 18% by mass, and particularly preferably in an amount within the range of 4 to 15% by mass from the viewpoint of preventing drying etc. of the aqueous inks near ink ejection nozzles.

(Pigment)

No particular limitation is imposed on the pigment used in the present invention, and organic pigments and

inorganic pigments used for aqueous inks for aqueous inkjet recording may be used. The pigment used may be an untreated pigment not subjected to surface treatment for improving dispersibility or a treated pigment subjected to surface treatment using a synergist such as a pigment derivative.

The inorganic pigment used may be, for example, iron oxide, carbon black, etc. Examples of the carbon black that can be used include carbon black produced by known methods such as a contact method, a furnace method, and a thermal method.

Examples of the organic pigment that can be used include azo pigments (including azo lakes, insoluble azo pigments, condensed azo pigments, chelate azo pigments, etc.), polycyclic pigments (such as phthalocyanine pigments, perylene pigments, perinone pigments, anthraquinone pigments, quinacridone pigments, dioxazine pigments, thioindigo pigments, isoindolinone pigments, and quinophthalone pigments), dye chelates (such as basic dye-type chelates and acid dye-type chelates), nitro pigments, nitroso pigments, and aniline black.

Examples of the pigment used for black inks include: carbon black manufactured by Mitsubishi Chemical Corporation such as No. 2300, No. 2200B, No. 900, No. 960, No. 980, No. 33, No. 40, No. 45, No. 45L, No. 52, HCF88, MA7, MA8, and MA100; carbon black manufactured by Columbian Chemicals Company such as Raven 5750, Raven 5250, Raven 5000, Raven 3500, Raven 1255, and Raven700; carbon black manufactured by Cabot Corporation such as Regal 400R, Regal 330R, Regal 660R, Mogul L, Mogul 700, Monarch 800, Monarch 880, Monarch 900, Monarch 1000, Monarch 1100, Monarch 1300, and Monarch 1400; and carbon black manufactured by Degussa such as Color Black FW1, FW2, FW2V, FW18, FW200, S150, S160, and S170, Printex 35, U, V, and 1400U, Special Black 6, 5, 4, and 4A, NIPEX 150, NIPEX 160, NIPEX 170, and NIPEX 180.

Specific examples of the pigment used for yellow inks include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

Specific examples of the pigment used for magenta inks include C.I. Pigment Red 5, 7, 12, 48 (Ca), 48 (Mn), 57 (Ca), 57:1, 112, 122, 123, 146, 168, 176, 184, 185, 202, 209, 269, and 282 and C.I. Pigment Violet 19.

Specific examples of the pigment used for cyan inks include C.I. Pigment Blue 1, 2, 3, 15, 15:3, 15:4, 16, 22, 60, 63, and 66.

Specific examples of the pigment used for white inks include: sulfates and carbonates of alkaline-earth metals; silicas such as fine silicic acid powder and synthetic silicates; calcium silicate; alumina; hydrated alumina; titanium oxide; zinc oxide; talc; and clay. These inorganic white pigments may have been subjected to surface treatment using various surface treatment methods.

When each of the aqueous inks included in the aqueous ink set for inkjet recording according to the present invention is produced, it is preferable to use a pigment dispersion in which the pigment is dispersed in advance in a solvent such as water.

When the pigment dispersion is used, it is preferable that the pigment used can be stably dispersed in the solvent.

The pigment dispersion that can be used is, for example, a dispersion prepared by dispersing the pigment in a solvent such as water using a pigment dispersant such as a polymer dispersant, a surfactant, or a pigment derivative.

As the pigment dispersible in the solvent, a pigment having dispersibility-imparting groups (hydrophilic functional groups or a salt thereof) on its surface may be used.

The pigment used may be a self-dispersible pigment capable of dispersing in a solvent including water without the use of the pigment dispersant.

The self-dispersible pigment used may be, for example, a pigment subjected to physical treatment or chemical treatment to introduce (graft) dispersibility-imparting groups to the surface of the pigment.

Examples of the method for subjecting the pigment to physical treatment or chemical treatment include vacuum plasma treatment, oxidation treatment with hypohalous acid and/or a hypohalous acid salt, oxidation treatment with ozone, a wet oxidation method in which the surface of the pigment is oxidized in water using an oxidizer, and a method including bonding p-aminobenzoic acid to the surface of the pigment to thereby bond carboxyl groups through phenyl groups.

It is unnecessary that the pigment dispersant for imparting dispersibility be used for an aqueous ink containing the self-dispersible pigment. Therefore, foaming caused by the pigment dispersant is unlikely to occur, and good ejection stability is obtained. Moreover, since a significant increase in viscosity caused by the pigment dispersant can be prevented, a larger amount of the pigment can be contained. This allows the density of printing to be increased sufficiently, or the ink can be handled easily.

A commercial self-dispersible pigment may be used. Examples of the commercial product include: Microjet CW-1 (tradename, manufactured by Orient Chemical Industries Co., Ltd.); and CAB-O-JET 200 and CAB-O-JET 300 (tradenames, manufactured by Cabot Corporation).

(Surfactant)

The surfactant is used for the purpose of adjusting the surface tensions of the first to n-th aqueous inks within

the above-described range. Examples of the surfactant include nonionic surfactants, anionic surfactants, cationic surfactants, and amphoteric surfactants. Of these, nonionic surfactants are used preferably.

Examples of the anionic surfactants include alkylbenzenesulfonate, alkylphenylsulfonate, alkylnaphthalenesulfonate, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of the anionic surfactants include dodecylbenzenesulfonate, isopropylnaphthalenesulfonate, monobutylphenylphenolmonosulfonate, monobutylbiphenylsulfonate, and dibutylphenylphenoldisulfonate.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkyl amines, polyoxyethylene fatty acid amides, fatty acid alkylolamides, alkyl alkanolamides, acetylene glycol, oxyethylene adducts of acetylene glycol, and polyethylene glycol-polypropylene glycol block copolymers. Of these, polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol, and polyethylene glycol-polypropylene glycol block copolymers are preferred. It is more preferable to use acetylene-based surfactants such as acetylene glycol and oxyethylene adducts of acetylene glycol. This is because the contact angle of each ink droplet landing on a recording medium can be reduced, so that a print in which the occurrence of printing unevenness such as white streaks is prevented can be obtained.

In addition to the above surfactants, other surfactants may be used such as: silicone-based surfactants such as polysiloxane oxyethylene adducts; fluorine-based surfactants such as perfluoroalkyl carboxylates, perfluoroalkyl sulfonates, and oxyethylene perfluoroalkyl ethers; and bio-surfactants such as spiculisporic acid, rhamnolipid, and lysolecithin. From the viewpoint of reducing the contact angle of each ink droplet landing on a recording medium to thereby obtain a print in which the occurrence of printing unevenness such as white streaks is reduced, it is more preferable to use silicone-based surfactants such as polysiloxane oxyethylene adducts.

The above surfactants may be used alone or in combination of two or more. It is preferable to use a surfactant that is prevented from aggregating or separating in each ink and can be stably dissolved in the solvent contained in the ink. Specifically, it is preferable to use a surfactant with an HLB within the range of 3 to 20, and it is more preferable to use a surfactant with an HLB within the range of 3 to 7. When the surfactant with an HLB within the range of 3 to 7 is used, it is preferable to use a combination of the surfactant with an HLB within the range of 3 to 7 and, for example, an organic solvent (1) that can dissolve the surfactant.

The surfactant is used preferably in an amount within the range of 0.001 to 4% by mass based on the mass of each of the first to n-th aqueous inks, more preferably in an amount within the range of 0.001 to 2% by mass, and still more preferably in an amount within the range of 0.01 to 1.5% by mass from the viewpoint of obtaining an ink set with which the occurrence of bleeding and color mixing can be further reduced even when the inks are printed on a non-absorptive recording medium or a low-absorptive recording medium.

(Urea compound)

Examples of the urea compound used in the present invention include urea and urea derivatives. Urea and urea derivatives have high moisturizing capability and can function as a solid humectant. Therefore, the urea compound can prevent each aqueous ink from drying or solidifying near ejection nozzles, and good ejectability of the ink can be maintained.

When droplets of each aqueous ink containing the urea compound land on a recording medium, the ink dries rapidly by, for example, heating. Therefore, even when the ink is printed on a non-absorptive recording medium or a low-absorptive recording medium, the occurrence of bleeding and color mixing can be effectively reduced.

Examples of the urea derivatives include ethylene urea, propylene urea, diethylurea, thiourea, N,N-dimethylurea, hydroxyethylurea, hydroxybutylurea, ethylenethiourea, and diethylthiourea, and two or more of these may be used simultaneously.

Particularly preferably, the urea compound used is urea, ethylene urea, or 2-hydroxyethylurea because they are easily dissolved in water and are easily available.

To improve ink ejectability and drying characteristics of prints, the content of the urea compound used is preferably in an amount within the range of 1.0% by mass to 20.0% by mass based on the mass of each of the first to n-th aqueous inks, more preferably in an amount within the range of 2.0% by mass to 15.0% by mass, and still more preferably in an amount within the range of 3.0% by mass to 10.0% by mass.

The water-soluble organic solvent (1) and the urea compound are used preferably in an amount within the range of 1 to 25% by mass based on the mass of each of the first to n-th aqueous inks, more preferably in an amount

within the range of 3 to 20% by mass, and particularly preferably in an amount within the range of 5 to 18% by mass because the ink is less likely to adhere to other mediums even immediately after printing (i.e., is excellent in fixability).

When the propylene glycol (2) and the organic solvent (3) are used, the total mass of the water-soluble organic solvent (1) used, the urea compound used, the propylene glycol (2), and the organic solvent (3) is preferably within the range of 20 to 50% by mass based on the mass of each of the first to n-th aqueous inks, more preferably within the range of 20 to 40% by mass, and particularly preferably within the range of 22 to 35% by mass because the ink is less likely to adhere to other mediums even immediately after printing (i.e., is excellent in fixability).

(Binder resin)

The binder resin used in the present invention may be one or a combination of two or more from among polyvinyl alcohol, gelatin, polyethylene oxide, polyvinylpyrrolidone, acrylic resins, urethane resins, dextran, dextrins, carrageenans (κ, ι, λ, etc.), agar, pullulan, water-soluble polyvinyl butyral, hydroxyethyl cellulose, and carboxymethyl cellulose.

In particular, the binder resin used is preferably an acrylic resin. Specifically, the binder resin used is preferably an acrylic resin having an amido group and particularly preferably an acrylic resin having an amido group and having an alkoxysilyl group etc. because of good re-dispersibility in the aqueous inks. The "acrylic resin" means a copolymer containing a monomer having a (meth)acryloyl group as a raw material.

(Acrylic resin having amido group)

The acrylic resin having an amido group has the effect of improving re-dispersibility of each of the aqueous inks in the present invention.

The acrylic resin having an amido group can be obtained, for example, by polymerizing monomer components including an acrylic monomer having an amido group. The acrylic monomer having an amido group is used preferably in an amount within the range of 5% by mass or less based on the total amount of the monomer components because better re-dispersibility can be obtained and a print excellent in rub-fastness is obtained. The acrylic monomer having an amido group is used preferably in an amount within the range of 0.5% by mass to 5% by mass, more preferably in an amount within the range of 0.5% by mass to 4% by mass, and particularly preferably in an amount within the range of 1.5% by mass to 3% by mass.

Examples of the acrylic monomer having an amido group include (meth)acrylamide, N-methyl(meth)acrylamide, N-ethyl(meth)acrylamide, N-propyl(meth)acrylamide, N-methylol(meth)acrylamide, N-isopropyl(meth)acrylamide, N-butyl(meth)acrylamide, N,N-dimethyl(meth)acrylamide, N,N-diethyl(meth)acrylamide, N,N-dipropyl(meth)acrylamide, N,N-dimethylaminopropyl(meth)acrylamide, diacetone(meth)acrylamide, and hydroxyethyl(meth)acrylamide.

Examples of an addition monomer that can be combined with the acrylic monomer having an amido group include: (meth)acrylic acid and alkali metal salts thereof; (meth)acrylate-based monomers such as methyl (meth)acrylate, ethyl (meth)acrylate, butyl (meth)acrylate, 2-ethylhexyl (meth)acrylate, benzyl (meth)acrylate, and cyclohexyl (meth)acrylate; and acrylic monomers such as (meth)acrylonitrile, 2-dimethylaminoethyl (meth)acrylate, and glycidyl (meth)acrylate.

Other examples of the additional monomer include: aromatic vinyl compounds such as styrene, α-methylstyrene, p-tert-butylstyrene, vinylnaphthalene, and vinylanthracene; vinylsulfonic acid compounds such as vinylsulfonic acid and styrene sulfonic acid; vinylpyridine compounds such as 2-vinylpyridine, 4-vinylpyridine, and naphthylvinylpyridine; vinyltriethoxysilane; vinyltrimethoxysilane; p-styryltrimethoxysilane; 3-methacryloxypropylmethyldimethoxysilane; 3-methacryloxypropyltrimethoxysilane; 3-methacryloxypropylmethyldiethoxysilane; 3-methacryloxypropyltriethoxysilane; and 3-acryloxypropyltrimethoxysilane.

To further improve the affinity for the pigment, the additional monomer used is preferably a monomer having an aromatic group such as styrene or benzyl (meth)acrylate.

Among the above acrylic resins each having an amido group, an acrylic resin (B) having an amido group and having an alkoxysilyl group etc. is used preferably because the formation of a coating near ink ejection nozzles due to drying or solidification of the aqueous inks can be prevented and because, even when the coating of an aqueous ink is formed, the coating can be re-dispersed in the aqueous ink newly supplied and therefore excellent ejectability can be maintained.

The acrylic resin (b) can be produced, for example, by polymerizing the monomer having an amido group and a monomer having an alkoxysilyl group etc. and referred to generally as a silane coupling agent.

Examples of the silane coupling agent having an ethylenically unsaturated group include monomers having an ethylenically unsaturated group such as vinyltriethoxysilane, vinyltrimethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane.

The silane coupling agent having an ethylenically unsaturated group provides a crosslinked structure to the

acrylic resin (B). The silane coupling agent is used preferably in an amount within the range of 0.05% by mass to 2% by mass based on the total amount of the monomers used to produce the acrylic resin (B), more preferably in an amount within the range of 0.05% by mass to 1.5% by mass, and particularly preferably in an amount within the range of 0.1% by mass to 1.0% by mass because the strength of a coating after printing and drying is increased and because the function of improving the rub-fastness of a print is obtained.

To improve adhesion of each aqueous ink used in the present invention to non-absorptive recording mediums and low-absorptive recording mediums, the acrylic resin may contain a component which is insoluble in tetrahydrofuran (THF) used as an eluent for molecular weight measurement by gel permeation chromatography and therefore whose molecular weight is not easily measured.

The component insoluble in THF used as the eluent for molecular weight measurement of the acrylic resin by gel permeation chromatography can be considered to have a number average molecular weight of at least 100,000 and a mass average molecular weight of at least 500,000.

When each of the aqueous inks used in the present invention is produced, the acrylic resin described above or an aqueous dispersion of the acrylic resin may be used.

Examples of the aqueous dispersion of the acrylic resin include: a dispersion prepared by dispersing the acrylic resin in water or a water-soluble solvent with the aid of an emulsifier; and a dispersion prepared by dispersing an acrylic resin having a hydrophilic group in a solvent such as water.

Examples of the emulsifier include: nonionic emulsifiers such as polyoxyethylene alkyl ethers, polyoxyethylene alkyl phenyl ethers, and polyoxyethylene-polyoxypropylene copolymers; anionic emulsifiers such as alkyl sulfates, alkyl benzenesulfonates, polyoxyethylene alkyl ether sulfates, and polyoxyethylene alkyl phenyl ether sulfates; and cationic emulsifiers such as quaternary ammonium salt. The emulsifier is used preferably in an amount within the range of 20 parts by mass or less based on 100 parts by mass of the acrylic resin and more preferably in an amount within the range of 5 to 15 parts by mass because a print excellent in water resistance can be obtained.

The aqueous dispersion of the acrylic resin can be produced, for example, by an emulsion polymerization method.

Examples of the emulsion polymerization method include a radical emulsion polymerization method using a radical polymerization initiator.

Examples of the radical polymerization initiator include: persulfates such as potassium persulfate, sodium persulfate, and ammonium persulfate; azo compounds such as 2,2'-azobisisobutyronitrile and dimethyl-2,2'-azobisisobutyrate; organic peroxides such as benzoyl peroxide and tert-butylperoxy-2-ethylhexanoate; and redox initiators such as a combination of an organic peroxide such as cumene hydroperoxide and a reducing agent such as iron oxide. The amount of the radical polymerization initiator used is generally preferably within the range of 0.01 parts by mass to 5 parts by mass and more preferably within the range of 0.05 parts by mass to 2 parts by mass based on 100 parts by mass of the total mass of the monomers used to produce the acrylic resin.

In the emulsion polymerization method, a chain transfer agent, a pH modifier, etc. may be used if necessary.

The emulsion polymerization method may be performed in 100 parts by mass to 500 parts by mass of water based on 100 parts by mass of the total mass of the monomers used to produce the acrylic resin.

The emulsion polymerization may be performed in a temperature range of preferably 5 to 100°C and more preferably 50 to 90°C over 0.1 to 10 hours.

In an acrylic resin dispersion prepared by dispersing the acrylic resin having a hydrophilic group in a solvent such as water, the acrylic resin used may be an acrylic resin having a hydrophilic group such as an anionic group, a cationic group, or a nonionic group.

Examples of the anionic group include a carboxyl group, a phosphoric acid group, an acidic phosphoric acid ester group, a phosphorous acid group, a sulfonic acid group, and a sulfinic acid group, and it is preferable to use any of them after neutralization with a basic compound.

Examples of the basic compound used to neutralize the anionic group include methylamine, dimethylamine, trimethylamine, ethylamine, diethylamine, triethylamine, 2-aminoethanol, 2-dimethylaminoethanol, ammonia, sodium hydroxide, potassium hydroxide, tetramethylammonium hydroxide, tetra-n-butylammonium hydroxide, and trimethylbenzylammonium hydroxide.

Examples of the cationic group include a primary amino group, a secondary amino group, a tertiary amino group, and an ammonium hydroxide group. It is preferable to neutralize these groups with an acidic compound.

Examples of the acidic compound used to neutralize the cationic group include formic acid, acetic acid, propionic acid, lactic acid, phosphoric acid monomethyl ester, methanesulfonic acid, benzenesulfonic acid, dodecylbenzenesulfonic acid, hydrochloric acid, sulfuric acid, and nitric acid.

Examples of the nonionic group include groups having a polyether chain such as polyoxyethylene and polyoxypropylene.

The acrylic resin having a hydrophilic group may be produced, for example, by polymerizing the monomer having an amido group, the silane coupling agent, and the monomer having a hydrophilic group.

Examples of the monomer having a hydrophilic group include: acrylic monomers having a carboxyl group such as (meth)acrylic acid and 2-carboxyethyl (meth)acrylate and alkali metal salts thereof; tertiary amino group-containing (meth)acrylamides such as N,N-dimethyl(meth)acrylamide; and tertiary amino group-containing (meth)acrylates such as dimethylaminoethyl (meth)acrylate and their quaternized compounds. Of these, (meth)acrylic acid or dimethylaminoethyl (meth)acrylate is used preferably.

The dispersion of the acrylic resin having a hydrophilic group can be produced, for example, by polymerizing the monomers in an organic solvent to produce the acrylic resin having a hydrophilic group and then dispersing the acrylic resin in a solvent such as water.

The organic solvent used may be one or a combination of two or more from among: aliphatic and alicyclic hydrocarbons such as n-hexane, n-heptane, n-octane, cyclohexane, and cyclopentane; aromatic hydrocarbons such as toluene, xylene, and ethylbenzene; esters such as ethyl acetate, n-butyl acetate, n-amyl acetate, ethylene glycol monomethyl ether acetate, ethylene glycol monoethyl ether acetate, and ethylene glycol monobutyl ether acetate; alcohols such as methanol, ethanol, iso-propanol, n-butanol, iso-butanol, ethylene glycol monomethyl ether, ethylene glycol monoethyl ether, ethylene glycol mono-n-butyl ether, propylene glycol monomethyl ether, propylene glycol mono-n-propyl ether, and diethylene glycol monobutyl ether; ketones such as acetone, methyl ethyl ketone, methyl isobutyl ketone, methyl n-amyl ketone, and cyclohexanone; ethers such as dimethoxyethane, tetrahydrofuran, dioxane, ethylene glycol dimethyl ether, ethylene glycol dibutyl ether, diethylene glycol dimethyl ether, and diethylene glycol dibutyl ether; N-methylpyrrolidone; dimethylformamide; dimethylacetamide; and ethylene carbonate.

As the radical polymerization initiator usable for the polymerization in the organic solvent, various azo compounds such as 2,2'-azobis(isobutyronitrile) and 2,2'-azobis(2,4-dimethylvaleronitrile) and various peroxides such as tert-butyl peroxypivalate, tert-butyl peroxybenzoate, and tert-butylperoxy-2-ethylhexanoate may be used.

A preferred method for dispersing the obtained acrylic resin having a hydrophilic group in an aqueous medium is a phase inversion emulsification method.

The phase inversion emulsification method is a method including: mixing a solvent such as water and an organic solvent solution of an acrylic resin having a hydrophilic group neutralized as needed with a basic compound or an acidic compound; and then dispersing the acrylic resin in the solvent described above (transfer emulsification). After the phase inversion emulsification, the organic solvent may be removed if necessary. During the phase inversion emulsification, an emulsifier may be used as needed so long as the object of the present invention can be achieved.

As the solvent for the acrylic resin dispersion, water, a water-soluble solvent, or a mixture thereof may be used.

No particular limitation is imposed on the particle diameter of the acrylic resin. However, an acrylic resin with a small diameter is preferred from the viewpoint of ejectability from an inkjet head. For example, it is preferable to use an acrylic resin having a volume average particle diameter within the range of 10 to 200 nm as measured using a Microtrac particle size distribution analyzer "UPA-EX150" manufactured by NIKKISO Co., Ltd.

The binder resin typified by the acrylic resin is used in an amount of preferably 3% by mass to 15% by mass (solid content), more preferably 5% by mass to 12% by mass, and particularly preferably 7% by mass to 10% by mass based on the mass of each ink, in order to obtain a print with good gloss and to prevent clogging of ink ejection nozzles.

(Water)

Each of the first to n-th aqueous inks included in the ink set of the present invention contains water. The water is a dispersion medium for the pigment.

The water used may be pure water such as ion exchanged water, ultrafiltrated water, reverse osmotic water, or distilled water or ultrapure water. The water may be used alone, or a solvent mixture of water and a water-soluble solvent may be used.

Examples of the water-soluble solvent include: ketones such as acetone, methyl ethyl ketone, methyl butyl ketone, and methyl isobutyl ketone; alcohols such as methanol, ethanol, 2-propanol, 2-methyl-1-propanol, 1-butanol, and 2-methoxyethanol; ethers such as tetrahydrofuran, 1,4-dioxane, and 1,2-dimethoxyethane; glycols such as dimethylformamide, N-methylpyrrolidone, ethylene glycol, diethylene glycol, triethylene glycol, tetraethylene glycol, polyethylene glycol, and polypropylene glycol; diols such as butanediol, pentanediol, hexanediol, and similar diols; glycol esters such as propylene glycol laurate; glycol ethers such as diethylene glycol monoethyl ether, diethylene glycol monobutyl ether, diethylene glycol monohexyl ether, propylene glycol ether, dipropylene glycol ether, and Cellosolves including triethylene glycol ether; alcohols such as methanol, ethanol, isopropyl alcohol, 1-propanol, 2-propanol, 1-butanol, 2-butanol, butyl alcohol, pentyl alcohol, and similar alcohols; sulfolane; lactones such as $\gamma$-butyrolactone; lactams such as N-(2-hydroxyethyl)pyrrolidone; and other various solvents known as water-soluble solvents. One or a mixture of two or more of these water-soluble organic solvents may be used.

(Pigment dispersant)

When each of the first to n-th aqueous inks included in the aqueous ink set for inkjet recording according to the present invention is produced, a pigment dispersant may be used as needed for the purpose of improving the dispersion stability of the pigment.

No particular limitation is imposed on the pigment dispersant, and a known polymer dispersant, a known surfactant, or a pigment derivative may be used.

The pigment dispersant used may be an aqueous resin, and preferred examples thereof include: polyvinyl alcohols; polyvinylpyrrolidones; acrylic resins such as acrylic acid-acrylate copolymers; styrene-acrylic resins such as styrene-acrylic acid copolymers, styrene-methacrylic acid copolymers, styrene-methacrylic acid-acrylate copolymers, styrene-α-methylstyrene-acrylic acid copolymers, and styrene-α-methylstyrene-acrylic acid-acrylate copolymers; styrene-maleic acid copolymers; styrene-maleic anhydride copolymers, vinylnaphthalene-acrylic acid copolymers; and salts of these aqueous resins. A commercial product can, of course, be used. Examples of the commercial product that can be used include AJISPER PB series manufactured by Ajinomoto Fine-Techno Co., Inc.), Disperbyk series manufactured by BYK-Chemie Japan, EFKA series manufactured by BASF, SOLSPERSE series manufactured by The Lubrizol Corporation, and TEGO series manufactured by EVONIK.

In the present invention, to obtain an ink for inkjet recording having further improved ejectability, a polymer (A) described later may be used as the pigment dispersant. In this case, an ink with the number of coarse particles significantly reduced can be obtained.

The polymer (A) used in the present invention is a polymer having a solubility in water of 0.1 g/100 mL or less and a number average molecular weight within the range of 1,000 to 6,000 and having anionic groups. Preferably, the polymer (A) forms fine particles in water when the degree of neutralization of the anionic groups with a basic compound is 100%.

The solubility of the polymer (A) in water is defined as follows. Sieves with mesh sizes of 250 μm and 90 μm are used to screen the polymer such that its particle diameter falls within the range of 250 μm to 90 μm. 0.5 g of the resulting polymer is sealed in a bag formed from a 400-mesh wire net, immersed in 50 mL of water, and left under mild stirring at a temperature of 25°C for 24 hours. After immersion for 24 hours, the 400-mesh wire net with the polymer sealed therein is dried in a dryer set at 110°C for 2 hours. The change in weight of the 400-mesh wire net with the polymer sealed therein before and after the immersion in water is measured, and the solubility is computed using the following expression.

[Math. 5]

Solubility (g/100 mL) = (Polymer-sealed 400-mesh wire net before immersion (g) - Polymer-sealed 400-mesh wire net after immersion (g)) × 2

In the present invention, whether or not fine particles are formed in water when the degree of neutralization of the anionic groups with the basic compound is 100% is judged as follows.

(1) The acid value of the polymer is measured in advance by an acid value measurement method according to JIS test method K 0070-1992. Specifically, 0.5 g of the polymer is dissolved in a tetrahydrofuran (hereinafter may be referred to as THF) solvent, and titration with a 0.1M alcohol solution of potassium hydroxide is performed using phenolphthalein as an indicator to determine the acid value.
(2) 1 g of the polymer is added to 50 mL of water, and a 0.1 mol/L aqueous potassium hydroxide solution is added in an amount sufficient to completely neutralize the polymer having the above-determined acid value to thereby completely neutralize the polymer.
(3) The completely neutralized solution is subjected to ultrasonic waves at a temperature of 25°C for 2 hours using an ultrasonic cleaner (ultrasonic cleaner US-102, SND Co., Ltd., 38 kHz, self-excited oscillation) and is then left to stand at room temperature for 24 hours.

After the solution is left to stand for 24 hours, a sample solution is sampled at a depth of 2 cm from the surface of the solution. Then a dynamic light scattering particle size distribution measurement device (dynamic light scattering particle size measurement device "Microtrac particle size distribution analyzer UPA-ST150" manufactured by NIKKISO Co., Ltd.) is used to determine whether or not information about light scattering due to the formation of fine particles is

obtained, whereby the presence of fine particles is checked.

The volume average particle diameter of the fine particles formed from the polymer (A) used in the present invention is preferably within the range of 5 nm to 1,000 nm, more preferably within the range of 7 nm to 700 nm, and particularly preferably within the range of 10 nm to 500 nm, in order to further improve the dispersion stability in water.

As the particle size distribution of the fine particles becomes narrower, the fine particles tend to exhibit better dispersibility. However, an embodiment in which the fine particles have a wide particle size distribution is not excluded. The volume average particle diameter and the particle size distribution are measured by the same method as the above-described measurement method for the fine particles using the dynamic light scattering particle size distribution measurement device (dynamic light scattering particle size measurement device "Microtrac particle size distribution analyzer UPA-ST150" manufactured by NIKKISO Co., Ltd.).

(Degree of neutralization of polymer (A))

The degree of neutralization of the polymer (A) used in the present invention is determined using the following expression.

[Math. 6]

$$\text{Degree of neutralization (\%)} = ((\text{Mass (g) of basic compound}) \times 56 \times 1{,}000) / (\text{Acid value (mg KOH/g) of polymer (A)} \times \text{Number of equivalents of basic compound} \times \text{mass (g) of polymer (A)}) \times 100$$

The acid value of the polymer (A) is measured according to JIS test method K 0070-1992. Specifically, 0.5 g of a sample is dissolved in a THF solvent, and the resulting solution is titrated with a 0.1M alcoholic solution of potassium hydroxide using phenolphthalein as an indicator to determine the acid value.

The acid value of the polymer (A) is preferably 40 to 400 mg KOH/g, more preferably 40 to 300 mg KOH/g, and most preferably 40 to 190 mg KOH/g.

The number average molecular weight of the polymer (A) is preferably 1,000 to 6,000 because good pigment dispersibility is obtained. The number average molecular weight is more preferably 1,300 to 5,000 and most preferably 1,500 to 4,500.

In the present invention, the number average molecular weight is a polystyrene-equivalent value measured by GPC (gel permeation chromatography) and is specifically a value measured under the conditions described below.

(Method for measuring number average molecular weight (Mn))

The measurement is performed by gel permeation chromatography (GPC) under the following conditions.

Measurement device: High performance GPC ("HLC-8220GPC" manufactured by TOSOH Corporation)
Columns: The following columns manufactured by TOSOH Corporation and connected in series are used.

"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (refractive index detector)
Column temperature: 40°C
Eluent: Tetrahydrofuran (THF)
Flow rate: 1.0 mL/minute

Injection amount: 100 μL (THF solution with a sample concentration of 0.4% by mass)
Standard samples: The following polystyrene standards are used to produce a calibration curve.

(Polystyrene standards)

"TSKgel standard polystyrene A-500" manufactured by TOSOH Corporation
"TSKgel standard polystyrene A-1000" manufactured by TOSOH Corporation
"TSKgel standard polystyrene A-2500" manufactured by TOSOH Corporation
"TSKgel standard polystyrene A-5000" manufactured by TOSOH Corporation
"TSKgel standard polystyrene F-1" manufactured by TOSOH Corporation
"TSKgel standard polystyrene F-2" manufactured by TOSOH Corporation
"TSKgel standard polystyrene F-4" manufactured by TOSOH Corporation
"TSKgel standard polystyrene F-10" manufactured by TOSOH Corporation
"TSKgel standard polystyrene F-20" manufactured by TOSOH Corporation
"TSKgel standard polystyrene F-40" manufactured by TOSOH Corporation
"TSKgel standard polystyrene F-80" manufactured by TOSOH Corporation
"TSKgel standard polystyrene F-128" manufactured by TOSOH Corporation
"TSKgel standard polystyrene F-288" manufactured by TOSOH Corporation
"TSKgel standard polystyrene F-550" manufactured by TOSOH Corporation

The polymer (A) used is preferably a polymer that is insoluble or poorly soluble when all the anionic groups are not neutralized and forms fine particles when all the anionic groups are neutralized.

The polymer (A) used may be a polymer having hydrophobic groups in addition to the hydrophilic anionic groups. Examples of such a polymer include a block polymer including a polymer block having hydrophobic groups and a polymer block having anionic groups.

As for the number of hydrophobic groups and the number of anionic groups, it is highly probable that the solubility in water exceeds 0.1 g/100 mL or fine particles are not formed when the degree of neutralization of the anionic groups with the basic compound is 100%. From this point of view, it is preferable that the number of anionic groups is not so large. In a polymer, the number of anionic groups and the solubility in water are not necessarily determined by the acid value of the polymer and the number of anionic groups in the design phase of the polymer. For example, among polymers having the same acid value, a polymer having a low molecular weight tends to have a high solubility in water, and a polymer having a high molecular weight tends to have a low solubility in water. Therefore, in the present invention, the polymer (A) is specified by its solubility in water.

The polymer (A) may be a homopolymer but is preferably a copolymer. The polymer (A) may be a random polymer, a block polymer, or an alternating polymer and is preferably a block polymer. The polymer may be a branched polymer but is preferably a linear polymer.

It is preferable in terms of design flexibility that the polymer (A) is a vinyl polymer. To produce a vinyl polymer having the molecular weight and solubility characteristics desired in the present invention, it is preferable to use a production method using "living polymerization" such as living radical polymerization, living cationic polymerization, or living anionic polymerization.

In particular, it is preferable that the polymer (A) is a vinyl polymer produced using a (meth)acrylate monomer as one of the raw materials. The method for producing such a vinyl polymer is preferably living radical polymerization or living anionic polymerization. From the viewpoint that the molecular weight of the block polymer and each segment thereof can be more precisely designed, living anionic polymerization is preferred.

Specifically, as the polymer (A) produced by living anionic polymerization, a polymer represented by general formula (3) can be used.

[Chem. 3]

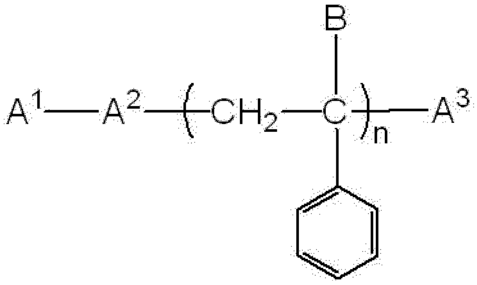

(3)

In formula (3), $A^1$ represents an organic lithium initiator residue, $A^2$ represents a polymer block of a monomer having an aromatic ring or a heterocycle, $A^3$ represents a polymer block containing an anionic group, n represents an integer of 1 to 5, and B represents an aromatic group or an alkyl group.

In general formula (3), $A^1$ represents an organic lithium initiator residue. Specific examples of the organic lithium initiator include: alkyllithiums such as methyllithium, ethyllithium, propyllithium, butyllithium (n-butyllithium, sec-butyllithium, iso-butyllithium, and tert-butyllithium), pentyllithium, hexyllithium, methoxymethyllithium, and ethoxymethyllithium; phenylalkylenelithiums such as benzyllithium, α-methylstyryllithium, 1,1-diphenyl-3-methylpentyllithium, 1,1-diphenylhexyllithium, and phenylethyllithium; alkenyllithiums such as vinyllithium, allyllithium, propenyllithium, and butenyllithium; alkynyllithiums such as ethynyllithium, butynyllithium, pentynyllithium, and hexynyllithium; aryllithiums such as phenyllithium and naphthyllithium; heterocyclic lithiums such as 2-thienyllithium, 4-pyridyllithium, and 2-quinolyllithium; and alkyl lithium-magnesium complexes such as tri(n-butyl)magnesium lithium and trimethyl magnesium lithium.

With the organic lithium initiator, the bond between the organic group and lithium is cleaved. An active end is thereby formed in the organic group, and polymerization starts from the active end. Therefore, the organic group originating from the organic lithium is bonded to an end of the polymer obtained. In the present invention, the organic group originating from the organic lithium and bonded to the end of the polymer is referred to as the organic lithium initiator residue. For example, in a polymer using methyllithium as the initiator, the organic lithium initiator acid group is a methyl group. In a polymer using butyllithium as the initiator, the organic lithium initiator acid group is a butyl group.

In general formula (3) above, $A^2$ represents a polymer block having hydrophobic groups. $A^2$ is a group used for the purpose of obtaining the appropriate solubility balance balance as described above and is preferably a group that exhibits high adsorptive power for the pigment when in contact with the pigment. From this point of view, $A^2$ is preferably a polymer block of a monomer having an aromatic ring or a heterocycle.

Specifically, the polymer block of a monomer having an aromatic ring or a heterocycle is a homopolymer or copolymer block obtained by homopolymerization or copolymerization of a monomer having an aromatic ring such as a styrene-based monomer or a monomer having a heterocycle such as a vinylpyridine-based monomer.

Examples of the monomer having an aromatic ring include: styrene-based monomers such as styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, α-methylstyrene, and p-methyl-α-methylstyrene; vinylnaphthalene; and vinylanthracene.

Examples of the monomer having a heterocycle include vinylpyridine-based monomers such as 2-vinylpyridine and 4-vinylpyridine.

These monomers may be used alone or as a mixture of two or more.

In general formula (3), $A^3$ represents a polymer block containing an anionic group. $A^3$ is used for the purpose of providing appropriate solubility as described above and for the purpose of imparting dispersion stability in water when a pigment dispersion is formed.

Examples of the anionic group in the polymer block $A^3$ include a carboxyl group, a sulfonic acid group, and a phosphoric acid group. Of these, a carboxyl group is preferred because of the ease of preparation, a wide choice of monomer types, and availability. Two carboxyl groups in the same molecule or different molecules may undergo dehydration condensation to thereby form an acid anhydride group.

No particular limitation is imposed on the method for introducing anionic groups into $A^3$. For example, when the anionic groups are carboxyl groups, $A^3$ may be a homopolymer or copolymer block (PB1) obtained by homopolymerization of (meth)acrylic acid or copolymerization of (meth)acrylic acid with another monomer or may be a polymer block (PB2) obtained by homopolymerizing a (meth)acrylate having a protecting group that can be reconverted into an anionic group by deprotection or copolymerizing this (meth)acrylate with another monomer to obtain a homopolymer or a copolymer and then reconverting part or all of the protecting groups that can be reconverted into anionic groups into the anionic groups.

The (meth)acrylic acid used for the polymer block $A^3$ means acrylic acid and methacrylic acid, and the (meth)acrylate means acrylate and methacrylate.

Specifically, the (meth)acrylate used may be one or a combination of two or more from among methyl (meth)acrylate, ethyl (meth)acrylate, iso-propyl (meth)acrylate, allyl (meth)acrylate, n-butyl (meth)acrylate, iso-butyl (meth)acrylate, sec-butyl (meth)acrylate, tert-butyl (meth)acrylate, n-amyl (meth)acrylate, iso-amyl (meth)acrylate, n-hexyl (meth)acrylate, n-octyl (meth)acrylate, 2-ethylhexyl (meth)acrylate, n-lauryl (meth)acrylate, n-tridecyl (meth)acrylate, n-stearyl (meth)acrylate, phenyl (meth)acrylate, benzyl (meth)acrylate, cyclohexyl (meth)acrylate, 4-tert-butylcyclohexyl (meth)acrylate, isobornyl (meth)acrylate, tricyclodecanyl (meth)acrylate, dicyclopentadienyl (meth)acrylate, adamantyl (meth)acrylate, glycidyl (meth)acrylate, tetrahydrofurfuryl (meth)acrylate, 2-methoxyethyl (meth)acrylate, 2-ethoxyethyl (meth)acrylate, dimethylaminoethyl (meth)acrylate, diethylaminoethyl (meth)acrylate, trifluoroethyl (meth)acrylate, tetrafluoropropyl (meth)acrylate, pentafluoropropyl (meth)acrylate, octafluoropentyl (meth)acrylate, pentadecafluorooctyl (meth)acrylate, heptadecafluorodecyl (meth)acrylate, N,N-dimethyl(meth)acrylamide, (meth)acryloylmorpholine, (meth)acrylonitrile, and polyalkylene oxide group-containing (meth)acrylates such as polyethylene glycol (meth)acrylate, polypropylene glycol (meth)acrylate, polyethylene glycol-polypropylene glycol (meth)acrylate, polyethylene glycol-polybutylene glycol (meth)acrylate, polypropylene glycol-polybutylene glycol (meth)acrylate, methoxypolyethylene glycol (meth)acrylate, ethoxypolyethylene glycol (meth)acrylate, butoxypolyethylene glycol (meth)acrylate, octoxypolyethylene glycol (meth)acrylate, lauroxypolyethylene glycol (meth)acrylate, stearoxypolyethylene glycol (meth)acrylate, phenoxypolyethylene glycol (meth)acrylate, methoxypolypropylene glycol (meth)acrylate, and octoxypolyethylene glycol-polypropylene glycol (meth)acrylate.

In the living anionic polymerization method, when the monomer used is a monomer having an active proton-containing group such as an anionic group, the active end of the living anionic polymerized polymer immediately reacts with the active proton-containing group and is thereby deactivated, so that no polymer is obtained. In living anionic polymerization, it is difficult to polymerize a monomer having an active proton-containing group without any treatment. It is therefore preferable to perform polymerization with the active proton-containing group protected and then perform deprotection to reconvert the protecting group into the active proton-containing group.

For this reason, it is preferable that a monomer containing a (meth)acrylate having a protecting group that can be reconverted into an anionic group by deprotection is used for the polymer block $A^3$. The use of such a monomer for the polymerization described above can prevent inhibition of the polymerization. The anionic group protected by the protecting group can be reconverted into the anionic group by deprotection after a block copolymer is obtained.

For example, when the anionic group is a carboxyl group, the carboxyl group is esterified. In a subsequent step, deprotection is performed through hydrolysis etc., and the esterified group can thereby be reconverted into the carboxyl group. In this case, the protecting group that can be converted into the carboxyl group is preferably a group having an ester bond, and examples of such a group include: primary alkoxycarbonyl groups such as a methoxycarbonyl group, an ethoxycarbonyl group, a n-propoxycarbonyl group, and a n-butoxycarbonyl group; secondary alkoxycarbonyl groups such as an isopropoxycarbonyl group and a sec-butoxycarbonyl group; tertiary alkoxycarbonyl groups such as a t-butoxycarbonyl group; phenylalkoxycarbonyl groups such as a benzyloxycarbonyl group; and alkoxyalkylcarbonyl groups such as an ethoxyethylcarbonyl group.

Examples of the monomer that can be used when the anionic group is a carboxyl group include: alkyl (meth)acrylates such as methyl (meth)acrylate, ethyl (meth)acrylate, n-propyl (meth)acrylate, isopropyl (meth)acrylate, n-butyl (meth)acrylate, sec-butyl (meth)acrylate, isobutyl (meth)acrylate, t-butyl (meth)acrylate, 2-ethylhexyl (meth)acrylate, decyl (meth)acrylate, undecyl (meth)acrylate, dodecyl (meth)acrylate (lauryl (meth)acrylate), tridecyl (meth)acrylate, pentadecyl (meth)acrylate, hexadecyl (meth)acrylate, heptadecyl (meth)acrylate, octadecyl (meth)acrylate (stearyl (meth)acrylate), nonadecyl (meth)acrylate, and icosanyl (meth)acrylate; phenylalkylene (meth)acrylates such as benzyl (meth)acrylate; and alkoxyalkyl (meth)acrylates such as ethoxyethyl (meth)acrylate. One of these (meth)acrylates (c1) may be used, or a combination of two or more may be used. Among these (meth)acrylates (c1), t-butyl (meth)acrylate and benzyl (meth)acrylate are preferably used because their conversion reaction into a carboxyl group can be easily performed. In view of industrial availability, t-butyl (meth)acrylate is more preferred.

In general formula (3), B represents an aromatic group or an alkyl group having 1 to 10 carbon atoms. n represents an integer of 1 to 5.

In the living anionic polymerization method, direct polymerization of a (meth)acrylate monomer at the active end of a highly nucleophilic styrene-based polymer may not proceed because of nucleophilic attack to carbonyl carbon, so that the (meth)acrylate monomer is not polymerized. Therefore, when the (meth)acrylate monomer is polymerized to the $A^1$-$A^2$ described above, a reaction control agent is used to control nucleophilicity, and then the (meth)acrylate monomer is polymerized. B in general formula (3) is a group originating from the reaction control agent. Specific examples of the reaction control agent include diphenylethylene, $\alpha$-methylstyrene, and p-methyl-$\alpha$-methylstyrene.

(Living anionic polymerization using microreactor)

The living anionic polymerization method can be performed as a batch process used for conventional free

radical polymerization by controlling the reaction conditions. A method in which a microreactor is used to perform polymerization continuously can also be used. The microreactor allows a polymerization initiator and a monomer to be mixed well, so that the reaction starts simultaneously in the microreactor. In addition, temperature is uniform within the microreactor, and a uniform polymerization rate is achieved, so that the polymer produced can have a narrow molecular weight distribution. In addition, it is easy to produce a block copolymer in which the components of the blocks are not mixed with each other because their growing ends are stable. Since the reaction temperature is well controlled, side reactions can be easily prevented.

A general method of living anionic polymerization using the microreactor will be described with reference to Fig. 1 showing a schematic diagram of the microreactor.

A first monomer and a polymerization initiator for initiating polymerization are introduced from tube reactors P1 and P2 (7 and 8 in Fig. 1) into a T-shaped micromixer M1 (1 in Fig. 1) including a flow passage in which a plurality of liquids can be mixed, and the first monomer is subjected to living anionic polymerization in the T-shaped micromixer M1 to thereby form a first polymer (step 1).

Next, the first polymer obtained is transferred to a T-shaped micromixer M2 (2 in Fig. 1). In the micromixer M2, a reaction control agent introduced from a tube reactor P3 (9 in Fig. 1) is caused to react with the growing end of the obtained polymer to thereby control the reaction (step 2).

In this case, the value of n in general formula (3) can be controlled by the type and amount used of the reaction control agent.

Next, the first polymer subjected to reaction control in the T-shaped micromixer M2 is transferred to a T-shaped micromixer M3 (3 in FIG. 1), and a second monomer introduced from a tube reactor P4 and the first polymer subjected to reaction control are subjected to living anionic polymerization continuously in the mixer M3 (step 3).

Then the reaction is quenched with an active proton-containing compound such as methanol, and a block copolymer is thereby produced.

When the polymer (A) represented by general formula (3) is produced using the microreactor described above, a monomer having an aromatic ring or a heterocycle is used as the first monomer, and an organic lithium initiator is used as the initiator to initiate the reaction, whereby a polymer block of the monomer having an aromatic ring or a heterocycle, i.e., $A^2$ described above, (an organic group, i.e., the organic lithium initiator residue $A^1$, is bonded to one end of the polymer block $A^2$) is obtained.

Next, the reaction control agent is used to control the reactivity of the growing end. Then a monomer containing a (meth)acrylate having a protecting group that can be reconverted into the anionic group is used as the second monomer and allowed to react to thereby obtain a polymer block.

Then a deprotection reaction such as hydrolysis is performed to reconvert the protecting groups into the anionic groups, and $A^3$ described above, i.e., a polymer block having the anionic groups, is thereby obtained.

A detailed description will be given of the method for reconverting an ester bond in the protecting group that can be reconverted into the anionic group into the anionic group by a deprotection reaction such as hydrolysis.

The hydrolysis reaction of the ester bond proceeds under acidic conditions and also under basic conditions, but the conditions vary slightly depending on the type of ester bond-containing group. For example, when the ester bond-containing group is a primary alkoxycarbonyl group such as a methoxycarbonyl group or a secondary alkoxycarbonyl group such as an isopropoxycarbonyl group, a carboxyl group can be obtained by hydrolysis under basic conditions. Examples of a basic compound used to form the basic conditions in this case include metal hydroxides such as sodium hydroxide and potassium hydroxide.

When the ester bond-containing group is a tertiary alkoxycarbonyl group such as a t-butoxycarbonyl group, a carboxyl group can be obtained by hydrolysis under acidic conditions. Examples of an acidic compound used to form the acidic conditions in this case include: mineral acids such as hydrochloric acid, sulfuric acid, and phosphoric acid; Bronsted acids such as trifluoroacetic acid; and Lewis acids such as trimethylsilyl triflate. The reaction conditions of hydrolysis of a t-butoxycarbonyl group under acidic conditions are disclosed in, for example, "Yukikagoubutsuno-gosei-IV (Synthesis of Organic Compounds IV), Nihon-kagakukai-hen-dai-5-han Jikken-kagaku-kouza-16 (the Fifth Series of Experimental Chemistry Vol. 16, Ed. by the Chemical Society of Japan)."

Another example of the method for converting the t-butoxycarbonyl group into a carboxyl group is a method in which a cation exchange resin is used instead of the acid described above. Examples of the cation exchange resin include resins having, in their polymer side chains, acid groups such as carboxyl groups (-COOH) and sulfo groups ($-SO_3H$). Of these, a strongly acidic cation exchange resin having sulfo groups in its side chains is preferable because the rate of the reaction can be increased. Examples of the commercial product of the cation exchange resin that can be used in the present invention include strongly acidic cation exchange resin "Amberlite" manufactured by Organo Corporation. The amount of the cation exchange resin used is preferably within the range of 5 to 200 parts by mass and more preferably within the range of 10 to 100 parts by mass based on 100 parts by mass of the polymer represented by general formula (3) above because hydrolysis can be performed effectively.

When the ester bond-containing group is a phenylalkoxycarbonyl group such as a benzyloxycarbonyl group,

the phenylalkoxycarbonyl group can be converted into a carboxyl group through a hydrogenation reduction reaction. In this case, the phenylalkoxycarbonyl group can be reconverted into a carboxyl group quantitatively by performing the reaction using hydrogen gas as a reducing agent in the presence of a palladium catalyst such as palladium acetate under the reaction condition of room temperature.

As described above, the reaction conditions for conversion into a carboxyl group vary depending on the type of ester bond-containing group. For example, a polymer obtained by copolymerization using t-butyl (meth)acrylate and n-butyl (meth)acrylate as raw materials of $A^3$ has t-butoxycarbonyl groups and n-butoxycarbonyl groups. Under the acidic conditions under which the t-butoxycarbonyl groups are hydrolyzed, the n-butoxycarbonyl groups are not hydrolyzed, so that only the t-butoxycarbonyl groups can be selectively hydrolyzed and converted into carboxyl groups through deprotection. Therefore, the acid value of the hydrophilic block ($A^3$) can be controlled by selecting, as raw material monomers of $A^3$, appropriate monomers each containing a (meth)acrylate having a protecting group that can be reconverted into an anionic group.

It is advantageous in terms of the stability of an aqueous pigment dispersion to be obtained that, in the polymer (A) represented by general formula (3) above, the polymer block ($A^2$) and the polymer block ($A^3$) are distinctly separated from each other. The molar ratio of the polymer block ($A^2$) to the polymer block ($A^3$), $A^2$:$A^3$, is preferably within the range of 100:10 to 100:500. If the ratio of $A^3$ to $A^2$ is less than 10/100, the dispersion stability of the pigment and the ejection stability during inkjet ejection tend to deteriorate. If the ratio of $A^3$ to $A^2$ exceeds 500/100, the hydrophilicity of the polymer becomes excessively high. In this case, when paper, for example, is used as a recording medium, the ink easily permeates the recording medium, and this causes deterioration in color development. In particular, the ratio $A^2$:$A^3$ is preferably 100:10 to 100:450.

In the polymer (A) represented by general formula (3) above, the number of units of the monomer having an aromatic ring or a heterocycle and forming the polymer block ($A^2$) is preferably within the range of 5 to 40, more preferably within the range of 6 to 30, and most preferably within the range of 7 to 25. The number of anionic groups included in the polymer block ($A^3$) is preferably within the range of 3 to 20, more preferably within the range of 4 to 17, and most preferably within the range of 5 to 15.

When the molar ratio of the polymer block ($A^2$) to the polymer block ($A^3$), $A^2$:$A^3$, is represented by the molar ratio of the number of moles of the aromatic rings or heterocycles included in the polymer block ($A^2$) to the number of moles of the anionic groups included in ($A^3$), this ratio is preferably 100:7.5 to 100:400.

The acid value of the polymer (A) represented by general formula (3) above is preferably 40 to 400 mg KOH/g, more preferably 40 to 300 mg KOH/g, and most preferably 40 to 190 mg KOH/g. If the acid value is less than 40 mg KOH/g, the dispersion stability of the pigment and the ejection stability during inkjet ejection may be insufficient. If the acid value exceeds 400 mg KOH/g, the hydrophilicity of the polymer increases, and the ink easily permeates a recording medium, so that color development deteriorates. When the acid value exceeds 190 mg KOH/g, the water resistance of the ink obtained is affected in some cases.

The acid value of the polymer in the present invention is an acid value obtained by the same acid value measurement method as that for the fine particles of the polymer (A).

(Neutralizer: basic compound)

Preferably, the anionic groups in the polymer (A) are neutralized.

Any well-known and commonly used basic compound can be used for the basic compound for neutralizing the anionic groups in the polymer (A). For example, inorganic basic materials such as alkali metal hydroxides, e.g., sodium hydroxide and potassium hydroxide, and organic basic compounds such as ammonia, triethylamine, and alkanolamines can be used.

In the present invention, it is not necessary that the degree of neutralization of the polymer (A) present in the aqueous pigment dispersion be 100% with respect to the acid value of the polymer. Specifically, the anionic groups are neutralized such that the degree of neutralization of the polymer (A) is preferably 20% to 200% and more preferably 80% to 150%.

In the present invention, no particular limitation is imposed on the method for producing the aqueous inks for inkjet recording, and any known method can be used.

For example, one method that can be used includes: mixing the pigment, the pigment dispersant, water, the binder resin, and optional various additives under stirring; dispersing and milling them using any of various dispersing devices and ink mills such as a bead mill, an ultrasonic homogenizer, a high-pressure homogenizer, a paint shaker, a ball mill, a roll mill, a sand mill, a sand grinder, a DYNO-MILL, a Dispermat, an SC-MILL, and a Nanomizer; adding and mixing the rest of the materials; and adjusting the viscosity appropriately.

Each of the aqueous inks can also be prepared by: adding a water-soluble solvent and/or water, the binder resin, and optional various additives to a self-dispersible pigment or a high-concentration dispersion (mill base) prepared in advance by using any of the above-described dispersing devices; mixing and stirring the resulting mixture; and diluting

the mixture to the desired viscosity. By changing the pigment and the pigment concentration, aqueous color inks mutually different in at least one of hue, lightness, and chroma can be prepared. It is preferable to use a high-concentration dispersion prepared by dispersing the pigment with the aid of the polymer (A).

(Additional additives)

The aqueous inks for inkjet recording according to the present invention can also be produced by adding a water-soluble solvent and/or water, the binder resin, etc. and optionally adding a humectant (drying inhibitor), a penetrant, and other additives according to the desired physical properties.
After the preparation of each ink, a centrifugal step or a filtration step may be additionally performed.

(Humectant)

The humectant is added for the purpose of preventing drying of the ink. The humectant added for the purpose of preventing drying is contained in the ink in an amount of preferably 3 to 50% by mass.
No particular limitation is imposed on the humectant used in the present invention. It is preferable that the humectant is miscible with water and provides the effect of preventing clogging of a head of an inkjet printer. Examples of the humectant include ethylene glycol, diethylene glycol, triethylene glycol, polyethylene glycol having a molecular weight of 2,000 or less, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, meso-erythritol, and pentaerythritol. In particular, when 1,3-butyl glycol is contained, excellent effects on ink drying properties and ejectability are obtained while safety is achieved.

(Penetrant)

The penetrant is added for the purpose of improving the penetrability into a recording medium and controlling the diameter of dots on the recording medium.
Examples of the penetrant include: lower alcohols such as ethanol and isopropyl alcohol; ethylene oxide adducts of alkyl alcohols such as ethylene glycol hexyl ether and diethylene glycol butyl ether; and propylene oxide adducts of alkyl alcohols such as propylene glycol propyl ether. The amount of the penetrant contained in the ink is preferably 0.01 to 10% by mass.
The amount of the pigment in each of the inks for inkjet recording is preferably 1 to 20% by mass, in order to obtain a sufficient image density and to maintain the dispersion stability of the pigment in the ink.
If necessary, a preservative, a viscosity modifier, a pH modifier, a chelating agent, a plasticizer, an antioxidant, an ultraviolet absorber, etc. may be added.
The aqueous ink set for inkjet recording according to the present invention includes the above-described first to n-th aqueous inks. n is two or more, preferably 2 to 20, and more preferably 2 to 10.

(Recording medium)

No particular limitation is imposed on the recording medium for the aqueous inks for inkjet recording, and the recording medium can be an absorptive recording medium, a recording medium having an ink absorbing layer, a non-absorptive recording medium having no ink absorbency, a low-absorptive recording medium having low ink absorbency, etc. One feature of the aqueous inks for inkjet recording according to the present invention is that good color development is achieved particularly when recording is performed on a non-absorptive recording medium or a low-absorptive recording medium.
Examples of the absorptive recording medium include copying paper generally used in copiers (PPC paper), plain paper, fabric, corrugated cardboards, and wood. Examples of the recording medium having an absorbing layer include inkjet paper. Specific examples of the inkjet paper include PICTORICOPRO Photopaper manufactured by Pictorico. Such an absorptive recording medium prepared by forming an ink absorbing layer on its surface may be high cost.
However, non-absorptive recording mediums and low-absorptive recording mediums are excellent in water resistance and rub-fastness and advantageous because of their lower cost as compared with absorptive recording mediums prepared by forming an ink absorbing layer on their surface. On the other hand, as the absorbency of the non-absorptive recording mediums and the low-absorptive recording mediums decreases or when they are non-absorptive, bleeding is more likely to occur, and it is difficult to achieve the occurrence of bleeding and recording speed simultaneously. It is advantageous to use the recording method in the present invention for these non-absorptive recording mediums and low-absorptive recording mediums, and it is more advantageous to use the recording method for the non-absorptive recording mediums.

The "low-absorptive recording mediums" and the "non-absorptive recording mediums" are recording mediums in which the amount of water absorption from the start of contact until a lapse of 30 msec. is 10 mL/$m^2$ or less as measured by the Bristow method. The Bristow method is the most popular method for measuring the amount of liquid absorption in a short time and used in Japan Technical Association of the Pulp and Paper Industry (JAPAN TAPPI). The details of the test method are described in Standard No. 51 "Method for testing liquid absorbency of paper and paper board: Bristow method" in "the 2000 edition of JAPAN TAPPI paper and pulp testing methods."

The non-absorptive recording mediums and the low-absorptive recording mediums can also be classified according to water wettability of their recording surface. For example, 0.5 μL of a water droplet is dropped onto the recording surface of a recording medium, and the rate of reduction in contact angle is measured (this can be obtained by comparing the contact angle at 0.5 msec. after landing of the droplet with the contact angle at 5 seconds after the landing). This rate of reduction in contact angle can be used to characterize the recording medium. More specifically, as for properties of recording mediums, the non-absorptive in a "non-absorptive recording medium" means that the above rate of reduction is less than 1%, and the low-absorptive in a "low-absorptive recording medium" means that the above rate of reduction is 1% or more and less than 5%. Absorptive means that the above rate of reduction is 5% or more. The contact angle can be measured using, for example, a portable contact angle meter PCA-1 (manufactured by Kyowa Interface Science Co., Ltd.).

Examples of the non-absorptive recording medium include plastic films, recording mediums prepared by coating substrates such as paper substrates with plastics, and recording mediums prepared by bonding plastic films to these substrates. For example, products used as food packaging materials can be used, and well-known plastic films can be used. Specific examples include: polyester films such as polyethylene terephthalate films and polyethylene naphthalate films; polyolefin films such as polyethylene films and polypropylene films; polyamide-based films such as nylon films; polystyrene films; polyvinyl alcohol films; polyvinyl chloride films; polycarbonate films; polyacrylonitrile films; and polylactic acid films. In particular, polyester films, polyolefin films, and polyamide-based films are preferred, and polyethylene terephthalate, polypropylene, and nylon are more preferred. The above films may be coated with, for example, polyvinylidene chloride in order to impart barrier properties. A film on which a vapor deposition layer of a metal such as gold, silver, copper, or aluminum or a metal oxide such as silica or alumina has been deposited may also be used as needed.

The above plastic films may be unstretched films or may be uniaxially or biaxially stretched films. The surface of each film may be untreated. However, it is preferable that the film is subjected to treatment such as corona discharge treatment, ozone treatment, low-temperature plasma treatment, flame treatment, glow discharge treatment, etc. in order to improve its adhesion.

The thickness of the plastic film is appropriately changed according to its intended application. For example, when the film is used for a soft packaging application, the thickness of the film is preferably 10 μm to 100 μm so that the film can have flexibility, durability, and curling resistance. The thickness is more preferably 10 μm to 30 μm. Specific examples of such a film include PYLEN (registered trademark) available from TOYOBO Co., Ltd.

No particular limitation is imposed on the low-absorptive recording mediums, and examples thereof include coated paper prepared by forming a coating layer for absorbing oil-based inks on the surface of high-quality or acid-free paper that is formed mainly of cellulose and is generally not surface-treated. Specific examples include paper surface-coated with a coating to improve its appearance and smoothness and classified as coated paper for printing in "PRODUCTION STATISTICS CLASSIFICATION" by the Ministry of Economy, Trade and Industry. Examples of the coating include a coating prepared by mixing a white inorganic compound pigment such as clay (kaolin) or calcium carbonate and an adhesive (binder) such as starch. The coating amount of the coating is preferably about 10 to about 40 g/$m^2$. No particular limitation is imposed on the coated paper, and art paper such as printing paper, enamel paper, light coated paper, lightweight coated paper, etc. can be used. Examples of the low-absorptive recording mediums include: lightweight coated paper such as "OK EVERLIGHT COAT" manufactured by Oji Paper Co., Ltd. and "AURORA S" manufactured by Nippon Paper Industries Co., Ltd.; light coated paper (A3) such as "OK Coat L" manufactured by Oji Paper Co., Ltd. and "AURORA L" manufactured by Nippon Paper Industries Co., Ltd.; enamel paper (A2, B2) such as "OK Top Coat+" manufactured by Oji Paper Co., Ltd. and "AURORA Coat" manufactured by Nippon Paper Industries Co., Ltd.; and art paper (A1) such as "OK KINFUJI+" manufactured by Oji Paper Co., Ltd. and "Tokubishi Art" manufactured by Mitsubishi Paper Mills Limited.

[Examples]

The present invention will next be described in more detail by way of Examples.

(Method for preparing polymer (A))

(Synthesis Example 1)

Butyllithium (BuLi) used as the polymerization initiator and styrene (St) used as the first monomer were introduced from the tube reactors P1 and P2 in Fig. 1 into the T-shaped micromixer M1 in Fig. 1 and subjected to living anionic polymerization to form a polymer.

Next, the polymer obtained was transferred to the T-shaped micromixer M2 in Fig. 1 through the tube reactor R1 in Fig. 1, and a reaction control agent ($\alpha$-methylstyrene ($\alpha$-MeSt)) introduced from the tube reactor P3 in Fig. 1 was caused to react with the growing end of the polymer.

Next, tert-butyl methacrylate (t-BMA) used as the second monomer was introduced into the T-shaped micromixer M3 from the tube reactor P4 in Fig. 1. The second monomer and the polymer transferred through the tube reactor R2 in Fig. 1 were subjected to a continuous living anionic polymerization reaction. Then the reaction was quenched with methanol to thereby produce a block copolymer (PA-1).

In this process, the entire microreactor was immersed in a thermostatic bath to set the reaction temperature to 24°C. Each of the monomers and the reaction control agent introduced into the microreactor was dissolved in tetrahydrofuran (THF). The BuLi used was a commercial 2.6M hexane solution, and this solution was diluted with hexane. The amounts of the monomers forming the block copolymer (PA-1) were controlled by the concentration and introduction rate of the diluted solution (Table 1).

The block copolymer (PA-1) obtained was treated with a cation exchange resin to hydrolyze the copolymer. The reaction solution was subjected to evaporation under reduced pressure, and the solids obtained were pulverized to obtain polymer (P-1) (powder).

(Methods for measuring physical properties of polymer)

The physical properties of the polymer (P-1) obtained were measured as follows.

(Method for measuring number average molecular weight (Mn) and weight average molecular weight (Mw))

The measurement was performed by gel permeation chromatography (GPC) under the following conditions.

Measurement device: High performance GPC ("HLC-8220GPC" manufactured by TOSOH Corporation)
Columns: The following columns manufactured by TOSOH Corporation were connected in series and used.

"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (refractive index detector)
Column temperature: 40°C
Eluent: tetrahydrofuran (THF)
Flow rate: 1.0 mL/min
Injection amount: 100 $\mu$L (THF solution with a sample concentration of 0.4% by mass)
Standard samples: The following polystyrene standards were used to produce a calibration curve.

(Polystyrene standards)

"TSKgel standard polystyrene A-500" manufactured by TOSOH Corporation
"TSKgel standard polystyrene A-1000" manufactured by TOSOH Corporation
"TSKgel standard polystyrene A-2500" manufactured by TOSOH Corporation
"TSKgel standard polystyrene A-5000" manufactured by TOSOH Corporation
"TSKgel standard polystyrene F-1" manufactured by TOSOH Corporation
"TSKgel standard polystyrene F-2" manufactured by TOSOH Corporation

"TSKgel standard polystyrene F-4" manufactured by TOSOH Corporation
"TSKgel standard polystyrene F-10" manufactured by TOSOH Corporation
"TSKgel standard polystyrene F-20" manufactured by TOSOH Corporation
"TSKgel standard polystyrene F-40" manufactured by TOSOH Corporation
"TSKgel standard polystyrene F-80" manufactured by TOSOH Corporation
"TSKgel standard polystyrene F-128" manufactured by TOSOH Corporation
"TSKgel standard polystyrene F-288" manufactured by TOSOH Corporation
"TSKgel standard polystyrene F-550" manufactured by TOSOH Corporation

(Method for measuring acid value)

The measurement was performed according to JIS test method K 0070-1992. Specifically, 0.5 g of the polymer was dissolved in a tetrahydrofuran (THF) solvent, and titration with a 0.1M alcohol solution of potassium hydroxide was performed using phenolphthalein as an indicator to determine the acid value.

(Method for measuring solubility in water)

Sieves with mesh sizes of 250 μm and 90 μm were used to screen the polymer such that its particle diameter fell within the range of 250 μm to 90 μm. 0.5 g of the resulting polymer was sealed in a bag formed from a 400-mesh wire net, immersed in 50 mL of water, and left under mild stirring at a temperature of 25°C for 24 hours. After immersion for 24 hours, the 400-mesh wire net with the polymer sealed therein was dried in a dryer set at 110°C for 2 hours to dry the polymer. The change in weight of the 400-mesh wire net with the polymer sealed therein before and after the immersion in water was measured, and the solubility was computed using the following expression.

[Math. 7]

Solubility (g/100 mL) = (Polymer-sealed 400-mesh wire net before immersion (g) - Polymer-sealed 400-mesh wire net after immersion (g)) × 2

(Method for determining formation of fine particles in water and method for measuring average particle diameter (nm))

(1) The acid value of the polymer was determined according to the above-described method for measuring the acid value.
(2) 1 g of the polymer was added to 50 mL of water, and a 0.1 mol/L aqueous potassium hydroxide solution was added in an amount sufficient to completely neutralize the polymer having the acid value obtained in (1) above to thereby completely neutralize the polymer.
(3) The completely neutralized solution was subjected to ultrasonic waves at a temperature of 25°C for 2 hours using an ultrasonic cleaner (ultrasonic cleaner US-102, SND Co., Ltd., 38 kHz, self-excited oscillation) to disperse the polymer and was then left to stand at room temperature for 24 hours.

After the solution was left to stand for 24 hours, a sample solution was sampled at a depth of 2 cm from the surface of the solution. Then a dynamic light scattering particle size measurement device "Microtrac particle size distribution analyzer UPA-ST150" manufactured by NIKKISO Co., Ltd. was used to determine whether or not information about light scattering due to the formation of fine particles was obtained, whereby the presence of fine particles was checked. During the measurement, the average particle diameter was also measured.

(Method for measuring surface tension)

The same sample solution as that obtained in the method for determining the formation of fine particles in water was used, and a value measured using a Wilhelmy surface tension meter CBVP-Z (manufactured by Kyowa Interface Science Co., Ltd.) was used as the surface tension.
In the measurement, the temperature of the measurement sample was adjusted to 25°C, and 10 g of the ink

was filled into a petri dish with a diameter of 40 mm. A glass plate with a hook manufactured by Kyowa Interface Science Co., Ltd. (specification values: thickness 0.3 mm, width 23.9 mm, peripheral length 95.6 mm, weight 0.54 g) was used as a probe.

[Table 1]

| Table 1 | | Synthesis Example 1 |
|---|---|---|
| Polymer (A) | | P-14 |
| Reaction temperature | | 24°C |
| Initiator | Type | BuLi |
| | Moles | 1.0 |
| First monomer | Type | St |
| | Moles | 12.0 |
| Reaction control agent | Type | α-MeSt |
| | Moles | 2.0 |
| Second monomer | Type | tBMA |
| | Moles | 8.1 |
| Molar ratio of polymer block ($A^2$) formed from first monomer to polymer block ($A^3$) formed from second monomer | $A^2$:$A^3$= | 100:76 |
| Number average molecular weight | | 2471 |
| Acid value | mg KOH/g | 148 |
| Solubility in water (g/100 mL) | | 0.0056 |
| Presence of fine particles when degree of neutralization of anionic groups is 100% / volume average particle diameter (nm) | | Yes / 48 |
| Surface tension (mN/m) | | 67.7 |

In Tables 1 and 2, BuLi stands for normal butyllithium, St stands for styrene, DPE stands for 1,1-diphenylethylene, αMeSt stands for α-methylstyrene, and tBMA stands for tert-butyl methacrylate.

(Production Examples: Methods for producing aqueous pigment dispersions)

Aqueous pigment dispersions were obtained using the following methods in Production Examples. The amounts of raw materials used are shown in tables shown later.

(Production Example 1: Method for producing aqueous pigment dispersion (C-1))

Step 1 was performed. Specifically, a 1.0 L intensive mixer (Nippon Eirich Co., Ltd.) was charged with 150 parts by mass of a phthalocyanine-based pigment FASTOGEN Blue Pigment (C.I. Pigment 15:3, manufactured by DIC Corporation) used as the pigment, 30 parts by mass of the polymer (P-1) used as the polymer (A), 150 parts by mass of triethylene glycol used as a water-soluble organic solvent, and 20 parts by mass of a 34% aqueous potassium hydroxide solution, and then the mixture was kneaded at a rotor peripheral speed of 2.94 m/s and a jacket peripheral speed of 1 m/s for 25 minutes.

Next, step 2 was performed. Specifically, 450 parts by mass of ion exchanged water was gradually added to the kneaded mixture in the container of the intensive mixer under continuous stirring, and then 185 parts by mass of ion exchanged water was added and mixed. An aqueous pigment dispersion (C-1) with a pigment concentration of 15.0% was thereby obtained.

(Production Example 2: Method for producing aqueous pigment dispersion (Y-1))

An aqueous pigment dispersion in Production Example 2 was obtained in the same manner as in Production Example 1 except that the type of the pigment was changed.

The compositions in Production Examples 1 and 2 are shown in Table 2.

[Table 2]

| Table 2 | Production Example 1 | Production Example 2 |
|---|---|---|
| Name of aqueous pigment dispersion | C-1 | Y-1 |
| Type of pigment | PB15:3 | PY74 |
| Amount of pigment (parts by mass) | 150 | 150 |
| Type of polymer (A) | P-1 | P-1 |
| Amount of polymer (A) (parts by mass) | 30 | 30 |
| Acid value of polymer (A) | 148 | 148 |
| Mass ratio of polymer (A)/pigment | 0.2 | 0.2 |
| Step 1 | | |
| Type of water-soluble solvent | TEG | TEG |
| Amount of water-soluble solvent (parts by mass) | 150 | 150 |
| Amount of KOH (parts by mass) | 20 | 20 |
| Step 2 | | |
| Dispersion medium: first addition (parts by mass) | Water = 450 | Water = 450 |
| Dispersion mediums: second addition (parts by mass) | TEG:water = 0/185 | TEG:water = 0/185 |
| Volume average particle diameter (nm) of aqueous pigment dispersion | 101.2 | 94.1 |
| Number of coarse particles with volume average particle diameter of 1.0 μm or more ($\times 10^6$/mL) | 1 | 3 |

The abbreviations in the table are as follows.

PB15:3: Phthalocyanine-based pigment FASTOGEN Blue Pigment (C.I. Pigment 15:3 manufactured by DIC Corporation)
PY74: Pigment Yellow 74
KOH: 34% Aqueous potassium hydroxide solution
TEG: Triethylene glycol
Water: Ion exchanged water

(Method for preparing binder resin)

(Synthesis Example 2)

A four-neck flask equipped with a stirrer, a thermometer, a cooling tube, and a nitrogen introduction tube was charged with 16 parts by mass of "Newcol 707SF" [an anionic emulsifier manufactured by Nippon Nyukazai Co., Ltd.], 6.5 parts by mass of "NOIGEN TDS-200D" [a nonionic emulsifier manufactured by DAI-ICHI KOGYO SEIYAKU Co., Ltd.], and 220 parts by mass of deionized water. The temperature of the mixture was increased to 80°C under nitrogen flow, and then an aqueous solution prepared by dissolving 0.8 parts by mass of ammonium persulfate in 16 parts by mass of deionized water was added. Then a mixture of 60 parts by mass of 2-ethylhexyl acrylate, 100 parts by mass of styrene, 27 parts by mass of methyl methacrylate, 0.4 g of 3-methacryloxypropyltrimethoxysilane, 3 parts by mass of acrylamide, and 6 parts by mass of methacrylic acid was added dropwise over 3 hours. After completion of the dropwise addition, the resulting mixture was allowed to react for 2 hours, cooled to 25°C, and neutralized with 1.5 parts by mass of 28 mass% ammonia water, and deionized water was added to adjust the amount of non-volatile components to 45% by mass, whereby an aqueous acrylic resin dispersion (X-1) having a glass transition temperature (T parts) of 35°C and an average particle diameter of 60 nm was obtained. The final solid content of the acrylic resin dispersion (X-1) was 39%.

(Preparation of additive composition V)

8.0 Parts by mass of propylene glycol, 6.0 parts by mass of 3-methoxybutanol, 7.0 parts by mass of glycerin, 0.7 parts by mass of triethylene glycol, 2.0 parts by mass of SC-P1000, 5.0 parts by mass of ethylene urea, 0.012 parts by mass of TEGO WET KL245, 0.2 parts of triethanolamine, and 0.1 parts by mass ACTICIDE B20 were added to prepare additive composition V.

(Preparation of aqueous inks for inkjet recording)

33.3% by mass of the aqueous pigment dispersion obtained in Production Example 1 or 2 (the concentration of the pigment in the ink was 5% by mass), 17.8% by mass of the aqueous acrylic resin dispersion (X-1) obtained in Synthesis Example 3 (the acrylic resin in the ink was 7% by mass), 29.0% by mass of the additive composition V, and 0.4% by mass of one of surfactants shown in Tables 4 to 6 were added, and pure water was used to adjust the total amount to 100 parts by mass, whereby an aqueous ink for inkjet recording was obtained.

[Table 3]

| Table 3 | Manufacturer name | Product name | Skeleton | HLB |
|---|---|---|---|---|
| A | Air Products and Chemicals, Inc. | SURFYNOL 440 | Acetylene-based | 8 |
| B | Air Products and Chemicals, Inc. | SURFYNOL MD-20 | Acetylene-based | 3 |
| C | Air Products and Chemicals, Inc. | SURFYNOL DF-11 0D | Acetylene-based | 3 |
| D | EVONIK | TEGO Wet KL245 | Silicone-based | ND |
| E | EVONIK | TEGO Wet 270 | Silicone-based | ND |
| F | Nissin Chemical Co., Ltd. | SILFACE SAG014 | Silicone-based | 9 |
| G | Air Products and Chemicals, Inc. | SURFYNOL1 04PG50 | Acetylene-based | 4 |
| H | Air Products and Chemicals, Inc. | SURFYNOL 420 | Acetylene-based | 4 |
| I | Air Products and Chemicals, Inc. | EnviroGem AD01 | Acetylene-based | 4 |
| J | Air Products and Chemicals, Inc. | SURFYNOL SEF | Acetylene-based | 6 |

[Table 4]

| Table 4 | 1-A | 1-B | 1-C | 1-D | 1-E | 1-F | 1-G | 1-H | 1-I | 1-J |
|---|---|---|---|---|---|---|---|---|---|---|
| Aqueous pigment dispersion | C-1 | C-1 | C-1 | C-1 | C-1 | C-1 | C-1 | C-1 | C-1 | C-1 |
| Mass% of aqueous pigment dispersion | 33.3 | 33.3 | 33.3 | 33.3 | 33.3 | 33.3 | 33.3 | 33.3 | 33.3 | 33.3 |
| Mass% of aqueous acrylic resin dispersion (X-1) | 17.8 | 17.8 | 17.8 | 17.8 | 17.8 | 17.8 | 17.8 | 17.8 | 17.8 | 17.8 |
| Mass% of additive composition V | 29.0 | 29.0 | 29.0 | 29.0 | 29.0 | 29.0 | 29.0 | 29.0 | 29.0 | 29.0 |
| Surfactant | A | B | C | D | E | F | G | H | I | J |
| Mass% of surfactant | 0.4 | 0.4 | 0.4 | 0.4 | 0.4 | 0.4 | 0.4 | 0.4 | 0.4 | 0.4 |
| Mass% of water | Balance | Balance | Balance | Balance | Balance | Balance | Balance | Balance | Balance | Balance |
| Aqueous ink (Total mass%) | 100 | 100 | 100 | 100 | 100 | 100 | 100 | 100 | 100 | 100 |
| Surface tension (mN/m) of aqueous ink | 34.2 | 32.2 | 30.3 | 32.5 | 29.9 | 32.8 | 32.7 | 33.4 | 34.4 | 32.7 |

[Table 5]

| Table 5 | 2-A | 2-B | 2-C | 2-D | 2-E | 2-F | 2-G | 2-H | 2-I | 2-J |
|---|---|---|---|---|---|---|---|---|---|---|
| Aqueous pigment dispersion | Y-1 | Y-1 | Y-1 | Y-1 | Y-1 | Y-1 | Y-1 | Y-1 | Y-1 | Y-1 |
| Mass% of aqueous pigment dispersion | 33.3 | 33.3 | 33.3 | 33.3 | 33.3 | 33.3 | 33.3 | 33.3 | 33.3 | 33.3 |
| Mass% of aqueous acrylic resin dispersion (X-1) | 17.8 | 17.8 | 17.8 | 17.8 | 17.8 | 17.8 | 17.8 | 17.8 | 17.8 | 17.8 |
| Mass% of additive composition V | 29.0 | 29.0 | 29.0 | 29.0 | 29.0 | 29.0 | 29.0 | 29.0 | 29.0 | 29.0 |
| Surfactant | A | B | C | D | E | F | G | H | I | J |
| Mass% of surfactant | 0.4 | 0.4 | 0.4 | 0.4 | 0.4 | 0.4 | 0.4 | 0.4 | 0.4 | 0.4 |
| Mass% of water | Balance | Balance | Balance | Balance | Balance | Balance | Balance | Balance | Balance | Balance |
| Aqueous ink (Total mass%) | 100 | 100 | 100 | 100 | 100 | 100 | 100 | 100 | 100 | 100 |
| Surface tension (mN/m)of aqueous ink | 34.4 | 32.4 | 30.4 | 32.7 | 30.5 | 32.8 | 32.9 | 33.6 | 34.6 | 32.9 |

(Production Example 4: Method for producing aqueous inks for inkjet recording)

Aqueous inks for inkjet recording were prepared by using additive compositions V with different composition ratios and a surfactant named "A" in Table 3.

The compositions are shown in Table 6.

[Table 6]

| Table 6 | 3-A | 4-A | 5-A | 6-A |
|---|---|---|---|---|
| Aqueous pigment dispersion | C-1 | Y-1 | Y-1 | Y-1 |
| Mass% of PG | 14.0 | 14.0 | 8.0 | 8.0 |
| Mass% of MB | 0.0 | 0.0 | 13.0 | 13.0 |
| Mass% of GLYB | 7.0 | 7.0 | 0.0 | 5.0 |
| Mass% of TEGB | 6.0 | 6.0 | 6.0 | 6.0 |
| Mass% of SC-P1000B | 2.0 | 2.0 | 2.0 | 2.0 |
| Mass% of ethylene urea | 5.0 | 5.0 | 5.0 | 0.0 |
| Mass% of KL245 | 0.012 | 0.012 | 0.012 | 0.012 |
| Mass% of triethanolamine | 0.2 | 0.2 | 0.2 | 0.2 |
| Mass% of ACTICIDE B20 | 0.1 | 0.1 | 0.1 | 0.1 |
| Mass% of Polymer A | 7 | 7 | 7 | 7 |
| Mass% of surfactant | A | A | A | A |
| Mass% of surfactant | 0.4 | 0.4 | 0.4 | 0.4 |
| Mass% of water | Balance | Balance | Balance | Balance |
| Aqueous ink (Total mass%) | 100 | 100 | 100 | 100 |
| Surface tension (mN/m) of aqueous ink | 35.2 | 35.5 | 34.2 | 35.8 |

The abbreviations in the table are as follows.

PG: Propylene glycol manufactured by Wako Pure Chemical Industries, Ltd.

MB: 3-Methoxy-1-butanol manufactured by Daicel Corporation

GLY: Refined glycerin manufactured by Kao Corporation

TEG: Triethylene glycol manufactured by NIPPON SHOKUBAI Co., Ltd.

SC-P1000: Polyoxypropylene(14) polyglyceryl ether manufactured by Sakamoto Yakuhin Kogyo Co., Ltd.

Ethylene urea: 2-Imidazolidinone manufactured by TOKYO CHEMICAL INDUSTRY Co., Ltd.

KL245: Silicone-based surfactant TEGOWET KL245 manufactured by EVONIK

Triethanolamine: manufactured by Mitsui Chemicals, Inc.

ACTICIDE B20: manufactured by Thor Japan

(Evaluation of aqueous inks)

The produced aqueous inks for inkjet recording were evaluated as follows.

[Evaluation of bleeding of aqueous inks for inkjet recording]

Two different color inks selected from among the produced aqueous inks for inkjet recording were filled into inkjet heads KJ4B-YH manufactured by KYOCERA Corporation. The hydraulic head difference between a head nozzle plate surface and ink subtanks was set to +35 cm, and a negative pressure of -5.0 kPa was used to adjust a supply pressure. The gap between each inkjet head and a recording medium ("OK Top Coat+" manufactured by Oji Paper Co., Ltd.) was set to 1.2 mm. The heads were driven under the following conditions. The standard voltage of the inkjet heads and their standard temperature were used, and the size of droplets was set to 12 pL to perform printing. The distance between the inkjet heads was 6 cm, and a print was produced at a printing speed of 100 m/min, which is the maximum printing speed using the 600 dpi heads at 600 pi. Under these conditions, the time interval between landing of droplets of a first ink and landing of droplets of the next ink is 36 milliseconds. Prints were produced using various combinations of inks and visually observed under a microscope (40X). Bleeding between two different color aqueous inks for inkjet recording was evaluated according to the following criteria (see Fig. 2).

AA: Color mixing occurred only in a contact portion between two different color dots.
A: Color mixing occurred also in portions other than the contact portion between two different color dots, but the original colors were still present.
C: Two different color dots were completely mixed to form a secondary color.

[Offset resistance of inks]

One of the produced aqueous inks for inkjet recording was spread over an A2 coated paper sheet "OK Top Coat+" manufactured by Oji Paper Co., Ltd. applied to a copper plate using a #12 bar coater, and the resulting paper sheet was placed on a hot plate heated to 150°C for 5 seconds to dry the ink. Immediately after this, the resulting colored paper sheet was transferred to another hot plate heated to 100°C, and a white coated paper sheet was placed on the colored paper sheet. A weight was placed on the white coated paper sheet such that a load of 100 $g/cm^2$ was applied and was left to stand for 1 minute.

After a lapse of 1 minute, the weight was removed, and the white coated paper sheet was peeled off the colored paper sheet. Then the ratio of the coating remaining on the colored paper sheet was analyzed using image analysis software "ImageJ" and evaluated according to the following criteria.

A: The ratio of the coating remaining on the colored paper sheet was 80% or more.
C: The ratio of the coating remaining on the colored paper sheet was less than 80%.

[Ejection stability]

Under the same conditions as those in the [Evaluation of bleeding of aqueous inks for inkjet recording], an ejection test was performed to check ejection stability. Specifically, the same procedure as in the [Evaluation of bleeding of aqueous inks for inkjet recording] was repeated to perform printing, and the absence of start-up delay in a printed pattern and the absence of nozzle missing were checked. Then the heads were left to stand for 30 minutes without head caps. Then a second print was produced without recovery operation such as ink purging.

The occurrence of image irregularities in a print start position of the second print pattern due to start-up delay and the occurrence of nozzle missing were evaluated according to the following criteria.

A: No image irregularities were found in the print start position, and no nozzle missing occurred.
C: Image irregularities were found in the print start position, and blank spots due to nozzle missing were found in some positions.

The results are shown in the following tables.

[Table 7]

| Table 7 Ink set | Reference Example | Example 1 | Example 2 | Example 3 | Example 4 | Comparative Example 1 | Comparative Example 2 |
|---|---|---|---|---|---|---|---|
| First ink | 1-A | 1-A | 1-A | 1-A | 1-A | 1-A | 1-A |
| Surface tension of first ink (mN/m) | 34.2 | 34.2 | 34.2 | 34.2 | 34.2 | 34.2 | 34.2 |

(continued)

| Table 7 Ink set | Reference Example | Example 1 | Example 2 | Example 3 | Example 4 | Comparative Example 1 | Comparative Example 2 |
|---|---|---|---|---|---|---|---|
| Second ink | None | 2-A | 2-B | 2-D | 2-F | 2-C | 2-E |
| Surface tension of second ink (mN/m) | - | 34.4 | 32.4 | 32.7 | 32.8 | 30.4 | 30.5 |
| Difference in surface tension between first and second inks (mN/m) | - | 0.2 | -1.8 | -1.5 | -1.4 | -3.8 | -3.7 |
| Bleeding | - | AA | AA | AA | A | C | C |
| Offset resistance of ink | A | A | A | A | A | A | A |
| Ejection stability | A | A | A | A | A | A | A |

[Table 8]

| Table 8 Ink set | Reference Example | Example 5 | Example 6 | Example 7 | Example 8 | Example 9 | Example 10 |
|---|---|---|---|---|---|---|---|
| First ink | 1-B | 1-B | 1-B | 1-B | 1-B | 1-B | 1-B |
| Surface tension of first ink (mN/m) | 32.2 | 32.2 | 32.2 | 32.2 | 32.2 | 32.2 | 32.2 |
| Second ink | None | 2-A | 2-B | 2-C | 2-D | 2-E | 2-F |
| Surface tension of second ink (mN/m) | - | 34.4 | 32.4 | 30.4 | 32.7 | 30.5 | 32.8 |
| Difference in surface tension between first and second inks (mN/m) | - | 2.2 | 0.2 | -1.8 | 0.5 | -1.7 | 0.6 |
| Bleeding | - | AA | AA | A | AA | AA | AA |
| Offset resistance of ink | A | A | A | A | A | A | A |
| Ejection stability | A | A | A | A | A | A | A |

[Table 9]

| Table 9 Ink set | Reference Example | Example 11 | Example 12 | Example 13 | Example 14 | Example 15 | Comparative Example 3 |
|---|---|---|---|---|---|---|---|
| First ink | 1-C | 1-C | 1-C | 1-C | 1-C | 1-C | 1-C |
| Surface tension of first ink (mN/m) | 30.3 | 30.3 | 30.3 | 30.3 | 30.3 | 30.3 | 30.3 |
| Second ink | None | 2-B | 2-C | 2-D | 2-E | 2-F | 2-A |
| Surface tension of second ink (mN/m) | - | 32.4 | 30.4 | 32.7 | 30.5 | 32.8 | 34.4 |

(continued)

| Table 9 Ink set | Reference Example | Example 11 | Example 12 | Example 13 | Example 14 | Example 15 | Comparative Example 3 |
|---|---|---|---|---|---|---|---|
| Difference in surface tension between first and second inks (mN/m) | - | 2.1 | 0.1 | 2.4 | 0.2 | 2.5 | 4.1 |
| Bleeding | - | A | AA | A | AA | A | C |
| Offset resistance of ink | A | A | A | A | A | A | A |
| Ejection stability | A | A | A | A | A | A | A |

[Table 10]

| Table 10 Ink set | Reference Example | Example 16 | Example 17 | Example 18 | Example 19 | Example 20 | Example 21 |
|---|---|---|---|---|---|---|---|
| First ink | 1-D | 1-D | 1-D | 1-D | 1-D | 1-D | 1-D |
| Surface tension of first ink (mN/m) | 32.5 | 32.5 | 32.5 | 32.5 | 32.5 | 32.5 | 32.5 |
| Second ink | None | 2-A | 2-B | 2-C | 2-D | 2-E | 2-F |
| Surface tension of second ink (mN/m) | - | 34.4 | 32.4 | 30.4 | 32.7 | 30.5 | 32.8 |
| Difference in surface tension between first and second inks (mN/m) | - | 1.9 | -0.1 | -2.1 | 0.2 | -2.0 | 0.3 |
| Bleeding | - | A | AA | A | AA | AA | AA |
| Offset resistance of ink | A | A | A | A | A | A | A |
| Ejection stability | A | A | A | A | A | A | A |

[Table 11]

| Table 11 Ink set | Reference Example | Example 22 | Example 23 | Example 24 | Example 25 | Example 26 | Comparative Example 4 |
|---|---|---|---|---|---|---|---|
| First ink | 1-E | 1-E | 1-E | 1-E | 1-E | 1-E | 1-E |
| Surface tension of first ink (mN/m) | 29.9 | 29.9 | 29.9 | 29.9 | 29.9 | 29.9 | 29.9 |
| Second ink | None | 2-B | 2-C | 2-D | 2-E | 2-F | 2-A |
| Surface tension of second ink (mN/m) | - | 32.4 | 30.4 | 32.7 | 30.5 | 32.8 | 34.4 |
| Difference in surface tension between first and second inks (mN/m) | - | 2.5 | 0.5 | 2.8 | 0.6 | 2.9 | 4.5 |
| Bleeding | - | A | AA | AA | AA | A | C |
| Offset resistance of ink | A | A | A | A | A | A | A |

(continued)

| Table 11 Ink set | Reference Example | Example 22 | Example 23 | Example 24 | Example 25 | Example 26 | Comparative Example 4 |
|---|---|---|---|---|---|---|---|
| Ejection stability | A | A | A | A | A | A | A |

[Table 12]

| Table 12 Ink set | Reference Example | Example 27 | Example 28 | Example 29 | Example 30 | Example 31 | Example 32 |
|---|---|---|---|---|---|---|---|
| First ink | 1-F | 1-F | 1-F | 1-F | 1-F | 1-F | 1-F |
| Surface tension of first ink (mN/m) | 32.8 | 32.8 | 32.8 | 32.8 | 32.8 | 32.8 | 32.8 |
| Second ink | None | 2-A | 2-B | 2-C | 2-D | 2-E | 2-F |
| Surface tension of second ink (mN/m) | - | 34.4 | 32.4 | 30.4 | 32.7 | 30.5 | 32.8 |
| Difference in surface tension between first and second inks (mN/m) | - | 1.6 | -0.4 | -2.4 | -0.1 | -2.3 | 0.0 |
| Bleeding | - | A | AA | A | AA | A | A |
| Offset resistance of ink | A | A | A | A | A | A | A |
| Ejection stability | A | A | A | A | A | A | A |

[Table 13]

| Table 13 Ink set | Reference Example | Example 33 |
|---|---|---|
| First ink | 1-G | 1-G |
| Surface tension of first ink (mN/m) | 32.7 | 32.7 |
| Second ink | None | 2-G |
| Surface tension of second ink (mN/m) | - | 32.9 |
| Difference in surface tension between first and second inks (mN/m) | - | 0.2 |
| Bleeding | - | AA |
| Offset resistance of ink | A | A |
| Ejection stability | A | A |

[Table 14]

| Table 14 Ink set | Reference Example | Example 34 |
|---|---|---|
| First ink | 1-H | 1-H |
| Surface tension of first ink (mN/m) | 33.4 | 33.4 |
| Second ink | None | 2-H |
| Surface tension of second ink (mN/m) | - | 33.6 |
| Difference in surface tension between first and second inks (mN/m) | - | 0.2 |
| Bleeding | - | AA |

(continued)

| Table 14 Ink set | Reference Example | Example 34 |
|---|---|---|
| Offset resistance of ink | A | A |
| Ejection stability | A | A |

[Table 15]

| Table 15 Ink set | Reference Example | Example 35 |
|---|---|---|
| First ink | 1-I | 1-I |
| Surface tension of first ink (mN/m) | 34.4 | 34.4 |
| Second ink | None | 2-I |
| Surface tension of second ink (mN/m) | - | 34.6 |
| Difference in surface tension between first and second inks (mN/m) | - | 0.2 |
| Bleeding | - | AA |
| Offset resistance of ink | A | A |
| Ejection stability | A | A |

[Table 16]

| Table 16 Ink set | Reference Example | Example 36 |
|---|---|---|
| First ink | 1-J | 1-J |
| Surface tension of first ink (mN/m) | 32.7 | 32.7 |
| Second ink | None | 2-J |
| Surface tension of second ink (mN/m) | - | 32.9 |
| Difference in surface tension between first and second inks (mN/m) | - | 0.2 |
| Bleeding | - | AA |
| Offset resistance of ink | A | A |
| Ejection stability | A | A |

[Table 17]

| Table 17 Ink set | Reference Example | Comparative Example 5 | Comparative Example 6 | Comparative Example 7 |
|---|---|---|---|---|
| First ink | 3-A | 3-A | 3-A | 3-A |
| Surface tension of first ink (mN/m) | 35.2 | 35.2 | 35.2 | 35.2 |
| Second ink | None | 4-A | 5-A | 6-A |
| Surface tension of second ink (mN/m) | - | 35.5 | 34.2 | 35.8 |
| Difference in surface tension between first and second inks (mN/m) | - | 0.3 | -1.0 | 0.6 |
| Bleeding | - | C | AA | AA |
| Offset resistance of ink | C | C | A | B |

(continued)

| Table 17 Ink set | Reference Example | Comparative Example 5 | Comparative Example 6 | Comparative Example 7 |
|---|---|---|---|---|
| Ejection stability | A | A | C | C |

As can be seen from the results shown, in the aqueous ink sets for inkjet recording in the Examples, the occurrence of bleeding between aqueous inks for inkjet recording and the occurrence of ink offset were reduced, and the ejection stability was good.

In Comparative Examples 1 to 4, the surface tensions were outside the range of the present invention, and bleeding between aqueous inks for inkjet recording was found. In the ink set in Comparative Example 5, a combination of inks containing no 3-methoxybutanol serving as the water-soluble organic solvent (1) was used, and offset of the inks was observed. In the ink set in Comparative Example 6, a combination of an ink containing no glycerin and an ink containing no 3-methoxybutanol was used, and ejection failure due to drying in the inkjet head portions was found. In the ink set in Comparative Example 7, a combination of an ink containing no ethylene urea and an ink containing no 3-methoxybutanol was used, and ejection failure due to drying in the inkjet head portions was found.

Brief Description of Drawings

[Fig. 1] Fig. 1 is a schematic diagram of the microreactor used in the present invention.
[Fig. 2] Fig. 2 illustrates evaluation of bleeding between aqueous inks for inkjet recording in Examples of the present invention.

Reference Signs List

1: T-shaped micromixer M1
2: T-shaped micromixer M2
3: T-shaped micromixer M3
4: tube reactor R1
5: tube reactor R2
6: tube reactor R3
7: tube reactor P1 for precooling
8: tube reactor P2 for precooling
9: tube reactor P3 for precooling
10: tube reactor P4 for precooling

**Claims**

1. An aqueous ink set for inkjet recording comprising first to n-th aqueous inks for inkjet recording, wherein each of the aqueous inks contains a water-soluble organic solvent (1), a pigment, a surfactant, a urea compound, a binder resin, and water, the water-soluble organic solvent (1) having a boiling point of from 100°C to 200°C inclusive and a vapor pressure at 20°C of 0.5 hPa or more, and wherein all the first to n-th aqueous inks satisfy the following (a) :

$$-3 \leq \gamma 1 - \gamma 2 \leq 3 \ [\mathrm{mN/m}] \quad (a)$$

where $\gamma 1$ is the surface tension of any one of the first to n-th aqueous inks that is jetted as droplets prior to different one of the first to n-th aqueous inks, and $\gamma 2$ is the surface tension of the different one of the first to n-th aqueous inks that is jetted as droplets after the any one of the first to n-th aqueous inks.

2. The aqueous ink set for inkjet recording according to claim 1, wherein each of the aqueous inks further contains propylene glycol (2) and at least one organic solvent (3) selected from the group consisting of glycerin, diglycerin,

glycerin derivatives, and diglycerin derivatives.

**3.** The aqueous ink set for inkjet recording according to claim 1 or 2, wherein each of the aqueous inks further contains, as a pigment dispersant, a polymer (A) having an anionic group and having a solubility in water of 0.1 g/100 mL or less, a number average molecular weight within the range of 1,000 to 6,000, and an acid value within the range of 40 to 400 mg KOH/g.

**4.** The aqueous ink set for inkjet recording according to claim 3, wherein the polymer (A) is represented by general formula (3):

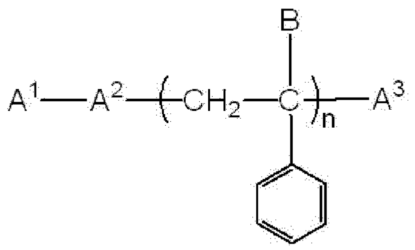

(3)

(wherein, in formula (3), $A^1$ represents an organic lithium initiator residue, $A^2$ represents a polymer block of a monomer having an aromatic ring or a heterocycle, $A^3$ represents a polymer block having an anionic group, n represents an integer of 1 to 5, and B represents an aromatic group or an alkyl group).

**5.** The aqueous ink set for inkjet recording according to any one of claims 1 to 4, wherein the water-soluble organic solvent (1) is 3-methoxy-1-butanol or 3-methyl-3-methoxy-1-butanol.

**6.** The aqueous ink set for inkjet recording according to any one of claims 1 to 5, wherein the surfactant is an acetylene-based surfactant or a silicone-based surfactant.

**7.** An inkjet recording method for a non-absorptive recording medium or a low-absorptive recording medium, wherein the inkjet recording method uses the aqueous ink set for inkjet recording according to any one of claims 1 to 6.

FIG. 1

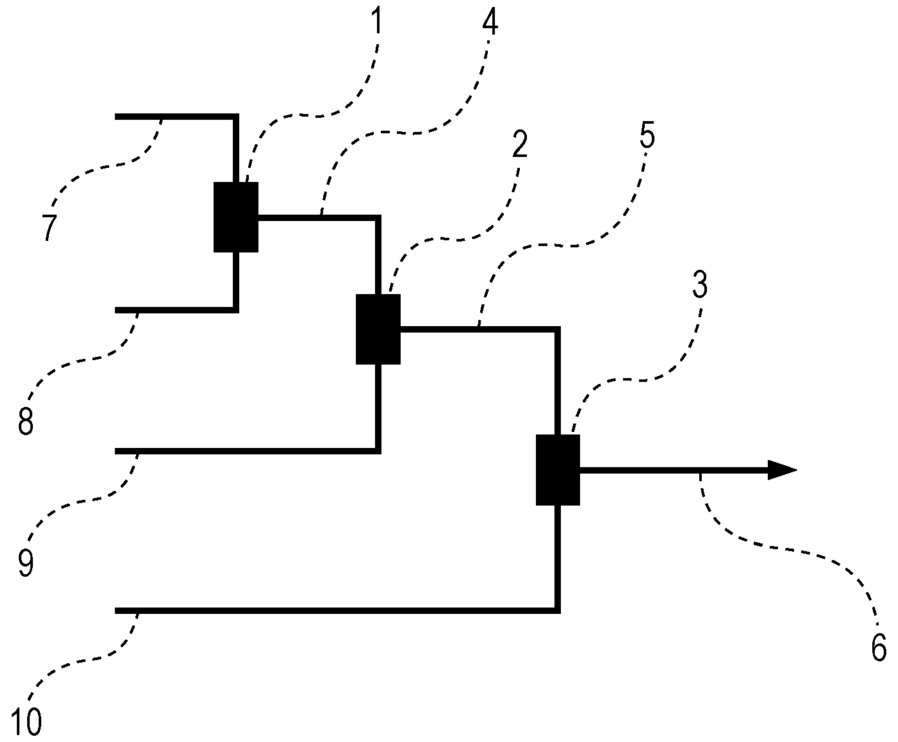


FIG. 2

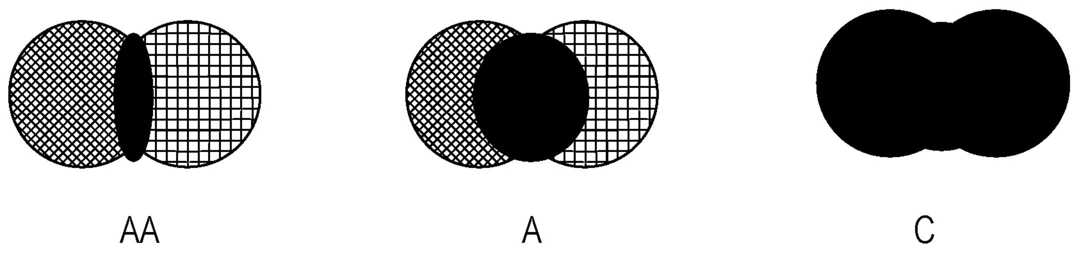

## INTERNATIONAL SEARCH REPORT

International application No.
PCT/JP2016/086163

A. CLASSIFICATION OF SUBJECT MATTER
*C09D11/40*(2014.01)i, *B41J2/01*(2006.01)i, *B41M5/00*(2006.01)i, *C09D11/322*(2014.01)i, *C09D11/326*(2014.01)i

According to International Patent Classification (IPC) or to both national classification and IPC

B. FIELDS SEARCHED

Minimum documentation searched (classification system followed by classification symbols)
C09D11/40, B41J2/01, B41M5/00, C09D11/322, C09D11/326

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2011-202089 A (Seiko Epson Corp.), 13 October 2011 (13.10.2011), claims; 0057, 0081 to 0087 & US 2011/0234728 A1 table 1 & CN 102233719 A | 1,3,6-7<br>2,4-5 |
| A | JP 2014-205770 A (Toyo Ink SC Holdings Co., Ltd.), 30 October 2014 (30.10.2014), claims; examples (Family: none) | 1-7 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
11 January 2017 (11.01.17)

Date of mailing of the international search report
24 January 2017 (24.01.17)

Name and mailing address of the ISA/
Japan Patent Office
3-4-3,Kasumigaseki,Chiyoda-ku,
Tokyo 100-8915,Japan

Authorized officer

Telephone No.

Form PCT/ISA/210 (second sheet) (January 2015)

**INTERNATIONAL SEARCH REPORT**

International application No.
PCT/JP2016/086163

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-184376 A (Konica Minolta IJ Technologies, Inc.), 27 September 2012 (27.09.2012), claims; examples (Family: none) | 1-7 |
| A | JP 5846465 B2 (DIC Corp.), 04 December 2015 (04.12.2015), claims; examples & US 2016/0264799 A1 claims & WO 2015/072339 A1 & EP 3070132 A1 & CN 105612226 A | 1-7 |
| P,A | WO 2016/098603 A1 (DIC Corp.), 23 June 2016 (23.06.2016), examples; claims & JP 5971451 B1 | 1-7 |
| E,A | JP 2017-2272 A (Ricoh Co., Ltd.), 05 January 2017 (05.01.2017), claims; examples (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005335280 A
- JP 2011079952 A


### Non-patent literature cited in the description


- Nihon-kagakukai-hen-dai-5-han Jikken-kagaku-kouza-16 (the Fifth Series of Experimental Chemistry. Yukikagoubutsuno-gosei-IV (Synthesis of Organic Compounds IV). vol. 16